# EUROPEAN PATENT APPLICATION

(11) **EP 4 468 718 A1**
(43) Date of publication of application: **27.11.2024**
(21) Application number: 24167154.4
(22) Date of filing: 28.03.2024
(51) Int. Cl.: H04N 21/439, H04N 21/44, H04N 21/45, H04N 21/454, H04N 21/84, H04N 21/845

(54) **SYSTEMS AND METHODS FOR CONTENT DISTRIBUTION POLICY ENFORCEMENT**

(30) Priority: 23.05.2023 US 202363468523 P; 25.08.2023 US 202318238449
(71) Applicant: Samsung Electronics Co., Ltd., Suwon-si, Gyeonggi-do 16677 (KR)
(72) Inventor: KACHARE, Ramdas P., San Jose, CA 95134 (US); ZHAO, Dongwan, San Jose, CA 95134 (US); LAU, Jimmy, San Jose, CA 95134 (US); CARGNINI, Luis Vitorio, San Jose, CA 95134 (US); FINDLEY, Joseph, San Jose, CA 95134 (US)
(74) Representative: Kuhnen & Wacker Patent- und Rechtsanwaltsbüro PartG mbB

(57) **Abstract**

A device is disclosed. The device may include a storage device to store a content stream, and a network interface device to transmit a filtered content stream. A processing circuit may be connected to the storage device and the network interface device. The processing circuit may apply a filtering policy to the content stream to produce the filtered content stream.

## Description

### FIELD

The disclosure relates generally to storage devices, and more particularly to content filtering of data on a storage device.

### BACKGROUND

With the increase in capacity offered by storage devices, applications may process more and more data. Transferring large amounts of data from the storage device to main memory for an application to process may require significant amounts of time. In addition, having the host processor execute the commands to process that data may impose a burden on the host processor.

A need remains to support managing data to be transferred without burdening the host processor.

### BRIEF DESCRIPTION OF THE DRAWINGS

The drawings described below are examples of how embodiments of the disclosure may be implemented, and are not intended to limit embodiments of the disclosure. Individual embodiments of the disclosure may include elements not shown in particular figures and/or may omit elements shown in particular figures. The drawings are intended to provide illustration and may not be to scale.
FIG. 1 shows a machine including a multi-function device for performing content filtering, according to embodiments of the disclosure.
FIG. 2 shows details of the machine of FIG. 1, according to embodiments of the disclosure.
FIG. 3 shows details of the multi-function device of FIG. 1, according to embodiments of the disclosure.
FIG. 4 shows a content stream being processed by the content detection circuit of FIG. 3 and the filtering circuit of FIG. 3, according to embodiments of the disclosure.
FIG. 5 shows details of the storage device of FIG. 1, according to embodiments of the disclosure.
FIG. 6 shows the machine of FIG. 1 communicating with a source machine and/or a client, according to embodiments of the disclosure.
FIG. 7 shows a flowchart of an example procedure for the multi-function device of FIG. 1 to filter the content stream of FIG. 4, according to embodiments of the disclosure.
FIG. 8 shows a flowchart of an example procedure for the multi-function device of FIG. 1 to access the content stream of FIG. 4, according to embodiments of the disclosure.
FIG. 9 shows a flowchart of an example procedure for the content detection circuit of FIG. 3 to detect content in the content stream of FIG. 4, and for the filtering circuit of FIG. 3 to filter the content stream of FIG. 4, according to embodiments of the disclosure.
FIG. 10 shows a flowchart of an example procedure for the delay circuit of FIG. 3 to delay delivery of the content stream of FIG. 4, according to embodiments of the disclosure.

### SUMMARY

A device, comprising, a storage device storing a content stream, a network interface device to transmit a filtered content stream and a processing circuit connected to the storage device and the network interface device, wherein the processing circuit is configured to apply a filtering policy to the content stream to produce the filtered content stream.

In one embodiment, the processing circuit includes a buffer to store a first content stream portion, the content stream including the first content stream portion and a second content stream portion and a filtering circuit, the filtering circuit configured to apply the filtering policy to the first content stream portion to produce a filtered content stream portion and the network interface device is configured to transmit the filtered content stream portion.

In one embodiment, the processing circuit further includes a second buffer, the second buffer storing a third content stream portion, a second content stream including the third content stream portion and a fourth content stream portion, the processing circuit further includes a second filtering circuit, the second filtering circuit configured to apply a second filtering policy to the third content stream portion to produce a second filtered content stream portion, a second filtered content stream including the second filtered content stream portion and the network interface device is configured to transmit the second filtered content stream portion.

In one embodiment, the network interface device is configured to transmit the filtered content stream portion to a first client and the second filtered content stream portion to a second client.

In one embodiment, the first content stream portion includes a content type and the filtering policy identifies the content type to be filtered.

In one embodiment, the processing circuit includes a content detection circuit to identify a content type in a first content stream portion, the first content stream including the first content stream portion and a second content stream portion.

In one embodiment, the processing circuit further includes a buffer storing the first content stream portion and the content detection circuit is configured to identify the content type in the first content stream portion based at least in part on the first content stream portion being in the buffer.

In one embodiment, the processing circuit further including, a second buffer storing a third content stream portion and a second content detection circuit to identify a second content type in the third content stream portion based at least in part on the third content stream portion being in the second buffer.

In one embodiment, the processing circuit includes a delay circuit to delay the network interface device for an interval before transmitting the filtered content stream.

In one embodiment, the processing circuit is configured to apply the filtering policy during the interval.

In one embodiment, the content stream includes a content stream portion and the filtering policy specifies to delete the content stream portion from the content stream or to replace the content stream portion in the content stream with a replacement content stream portion in the content stream.

A method, comprising, accessing a content stream using a device, filtering the content stream using a processing circuit of the device to produce a filtered content stream and transmitting the filtered content stream using a network interface device of the device.

In one embodiment, accessing the content stream using the device includes, receiving the content stream from a source and storing the content stream in a storage device of the device.

In one embodiment, accessing the content stream using the device includes storing a first content stream portion in a buffer of the processing circuit of the device, the content stream including the first content stream portion and a second content stream portion and filtering the content stream using the processing circuit of the device to produce the filtered content stream includes filtering the first content stream portion in the buffer of the processing circuit of the device to produce a filtered content stream portion.

In one embodiment, filtering the first content stream portion in the buffer of the processing circuit of the device to produce the filtered content stream portion includes applying a filtering policy to the first content stream portion in the buffer of the processing circuit of the device to produce the filtered content stream portion and the method further comprises applying a second filtering policy to the second content stream portion in the buffer of the processing circuit of the device to produce the second filtered content stream portion.

In one embodiment, transmitting the filtered content stream using a network interface device of the device includes, transmitting the filtered content stream portion using the network interface device to a first client and transmitting the second filtered content stream portion using the network interface device to a second client.

In one embodiment, filtering the content stream using the processing circuit of the device to produce the filtered content stream includes detecting a content type in the first content stream portion using the processing circuit of the device.

In one embodiment, filtering the content stream using the processing circuit of the device to produce the filtered content stream includes delaying transmission of the content stream for an interval by the network interface device of the device.

In one embodiment, filtering the content stream using the processing circuit of the device to produce the filtered content stream further includes filtering the content stream using the processing circuit of the device to produce the filtered content stream during the interval.

In one embodiment, the content stream includes a content stream portion and filtering the content stream using the processing circuit of the device to produce the filtered content stream includes replacing the content stream portion of the content stream with a replacement content stream portion.

### DETAILED DESCRIPTION

Reference will now be made in detail to embodiments of the disclosure, examples of which are illustrated in the accompanying drawings. In the following detailed description, numerous specific details are set forth to enable a thorough understanding of the disclosure. It should be understood, however, that persons having ordinary skill in the art may practice the disclosure without these specific details. In other instances, well-known methods, procedures, components, circuits, and networks have not been described in detail so as not to unnecessarily obscure aspects of the embodiments.

It will be understood that, although the terms first, second, etc. may be used herein to describe various elements, these elements should not be limited by these terms. These terms are only used to distinguish one element from another. For example, a first module could be termed a second module, and, similarly, a second module could be termed a first module, without departing from the scope of the disclosure.

The terminology used in the description of the disclosure herein is for the purpose of describing particular embodiments only and is not intended to be limiting of the disclosure. As used in the description of the disclosure and the appended claims, the singular forms "a", "an", and "the" are intended to include the plural forms as well, unless the context clearly indicates otherwise. It will also be understood that the term "and/or" as used herein refers to and encompasses any and all possible combinations of one or more of the associated listed items. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. The components and features of the drawings are not necessarily drawn to scale.

As data management shifts to centralized (or cloud) storage of data, managing the delivery of such data to a client becomes increasingly important. For some business models, the amount data of data to be managed may be relatively small, with little need to police the use of such data. But other business models may involve the transmission of large amounts of data, and the management of what data is delivered may be significant. For example, video on demand may involve large amounts of data to be delivered over a network: a 90 minute movie might involve transmitting 100 gigabytes (GB) or more of content. Further, the host might want to control what video is delivered. For example, the host or end user might want to ensure that any video delivered to a child does not include any prurient or violent content.

Identifying what content should be filtered may involve the use of artificial intelligence (AI) and/or machine learning (ML) models. AI/MI, models may involve some processing of the content. For example, an AI/ML model might process each image (also known as a frame) of a video stream separately, to identify which images should be filtered. Or, an AI/MI, model might process the video associated with a content stream, to eliminate language considered inappropriate. Processing each image or audio stream separately using a host processor might impose a burden on the host processor. Multiply this burden by the fact that any number of clients might be accessing content at any given time, and the burden imposed on the host might overburden the host processor, leading to interruptions or degradations in quality, such as due to latency, in the delivery of the content while the host processor attempts to keep up with filtering all the content streams.

Embodiments of the disclosure address this problem by performing content filtering in buffers in a bridge between a storage device and a network interface card (or other delivery mechanism). The content may be sequentially retrieved from the storage device and buffered in the bridge. The content filter may then be applied on the data in the buffer, with content subject to filtering being identified, replaced, or eliminated while in the buffer. The network interface card may then retrieve the (filtered) content from the buffer and deliver the (filtered) content to the client.

Embodiments of the disclosure may include multiple such buffers. Different content filtering may be applied to each buffer, enabling multiple clients to access content using different content filtering. For example, one client might want to filter violent content, while another client might want to filter audio content for objectionable language. The content streams in each buffer may be filtered appropriate to that client.

Embodiments of the disclosure may perform content filtering in two stages. In the first stage, the content may be analyzed to determine what forms of content may be included. Note that this stage may be performed independent of what filtering might actually be appropriate to the client. Thus, for example, the content may be analyzed to determine which portions are prurient, which portions are violent, which portions include objectionable language, and so on. In the second stage, filters appropriate to the client may be applied: content identified as by the filter may be removed from the buffer based on the prior analysis.

In some embodiments of the disclosure, the content stream may have been analyzed previously to identify the types of content included in the content stream. In such embodiments, the filter may be applied based on this earlier analysis, rather than repeating the analysis.

In some embodiments of the disclosure, the content stream may already be stored on the storage device. In other embodiments of the disclosure, the content stream may be stored on the storage device first, then analyzed and filtered as appropriate to the client.

In some embodiments of the disclosure, a content stream may be delayed before being delivered to the client. By delaying delivery, embodiments of the disclosure have time to perform content analysis and filtering, and to accommodate potential delays (for example, in retrieving the data from the storage device, in performing the content analysis and filtering, and/or delivery by the network interface card).

While the above discussion focuses on content filtering based on specific video or audio content, embodiments of the disclosure may support any desired content filtering. For example, content might be filtered based on a Quality of Service (QoS) level appropriate to the client. As an example, sports programs might be subject to a delay in broadcast (to encourage patrons to watch the games live in person, which generates revenue for the franchise/sports league). The content stream of the game might be stored on the storage device, but a time filter might be applied to prevent the game from being transmitted to a client too soon.

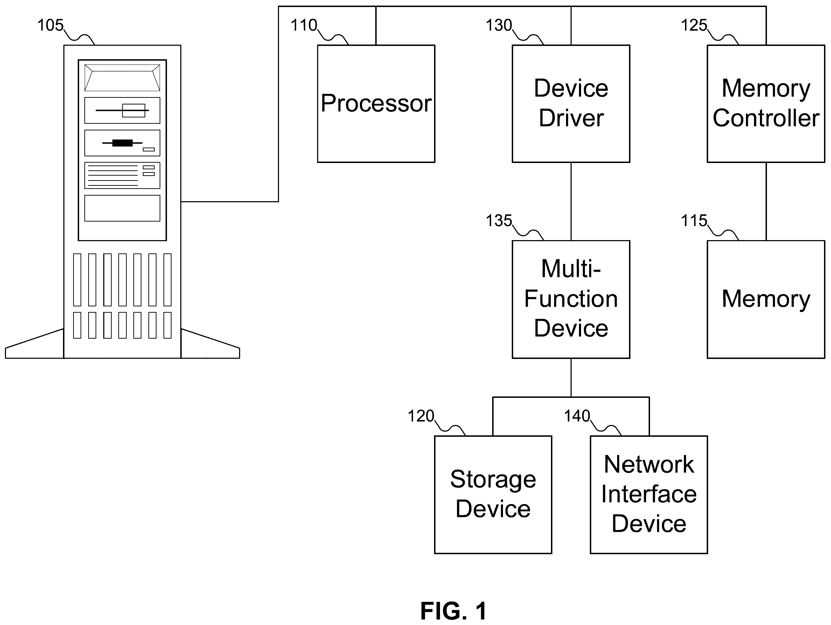

FIG. 1 shows a machine including a multi-function device for performing content filtering, according to embodiments of the disclosure. In FIG. 1, machine 105, which may also be termed a host or a system, may include processor 110, memory 115, and storage device 120. Processor 110 may be any variety of processor. Processor 110 may also be called a host processor. (Processor 110, along with the other components discussed below, are shown outside the machine for ease of illustration: embodiments of the disclosure may include these components within the machine.) While FIG. 1 shows a single processor 110, machine 105 may include any number of processors, each of which may be single core or multi-core processors, each of which may implement a Reduced Instruction Set Computer (RISC) architecture or a Complex Instruction Set Computer (CISC) architecture (among other possibilities), and may be mixed in any desired combination.

Processor 110 may be coupled to memory 115. Memory 115 may be any variety of memory, such as Dynamic Random Access Memory (DRAM), Static Random Access Memory (SRAM), Persistent Random Access Memory, Ferroelectric Random Access Memory (FRAM), or Non-Volatile Random Access Memory (NVRAM), such as Magneto-resistive Random Access Memory (MRAM), flash memory, etc. Memory 115 may be a volatile or non-volatile memory, as desired. Memory 115 may also be any desired combination of different memory types, and may be managed by memory controller 125. Memory 115 may be used to store data that may be termed "short-term": that is, data not expected to be stored for extended periods of time. Examples of short-term data may include temporary files, data being used locally by applications (which may have been copied from other storage locations), and the like.

Processor 110 and memory 115 may also support an operating system under which various applications may be running. These applications may issue requests (which may also be termed commands) to read data from or write data to either memory 115.

Storage device 120 may be used to store data that may be termed "long-term": that is, data that is expected to be stored for longer periods of time, or that does not need to be stored in memory 115. Storage device 120 may be accessed using device driver 130. While FIG. 1 shows one storage device 120, there may be any number (one or more) of storage devices in machine 105.

Embodiments of the disclosure may include any desired mechanism to communicate with storage device 120. For example, storage device 120 may connect to one or more busses, such as a Peripheral Component Interconnect Express (PCIe) bus, or storage device 120 may include Ethernet interfaces or some other network interface. Other potential interfaces and/or protocols to storage device 120 may include Non-Volatile Memory Express (NVMe), NVMe over Fabrics (NVMe-oF), Remote Direct Memory Access (RDMA), Transmission Control Protocol/Internet Protocol (TCP/IP), Universal Flash Storage (UFS), embedded MultiMediaCard (eMMC), InfiniBand, Serial Attached Small Computer System Interface (SCSI) (SAS), Internet SCSI (iSCSI), Serial AT Attachment (SATA), and cache-coherent interconnect protocols, such as the Compute Express Link (CXL) protocols, among other possibilities.

While FIG. 1 uses the generic term "storage device", embodiments of the disclosure may include any storage device formats that may benefit from the use of computational storage units, examples of which may include hard disk drives and Solid State Drives (SSDs). Any reference to "SSD" below should be understood to include such other embodiments of the disclosure.

For purposes of this document, a distinction is drawn between memory 115 and storage device 120. This distinction may be understood as being based on the type of commands typically used to access data from the components. For example, memory 115 is typically accessed using load or store commands, whereas storage device 120 is typically accessed using read and write commands. Memory 115 is also typically accessed by the operating system, whereas storage device 120 is typically accessed by the file system. (Cache coherent interconnect storage devices, as discussed below, are intended to be classified as storage devices, despite the fact that they may be accessed using load and store commands as well as read and write commands.)

Alternatively, the distinction between memory 115 and storage device 120 may be understood as being based on the persistence of data in the component. Memory 115 typically does not guarantee the persistence of the data without power being provided to the component, whereas storage device 120 may guarantee that data will persist even without power being provided. If such a distinction is drawn between memory 115 and storage device 120, then memory 115 may either not include non-volatile storage forms, or the non-volatile storage forms may erase the data upon power restoration (so that the non-volatile storage form appears as empty as volatile storage forms would appear upon restoration of power).

Alternatively, this distinction may be understood as being based on the speed of access to data stored by the respective components, with the faster component considered memory 115 and the slower component considered storage device 120. But using speed to distinguish memory 115 and storage device 120 is not ideal, as a Solid State Drive (SSD) is typically faster than a hard disk drive, but nevertheless would be considered a storage device 120 and not memory 115.

Machine 105 may also include accelerators (not shown in FIG. 1), which may support executing commands in a location other than processor 110. In this manner, an accelerator may help to reduce the load on processor 110. In addition, accelerators may be positioned closer to storage device 120, to support near-data processing. Performing near-data processing may reduce the time required to execute a command (performing the command on the data on storage device 120 may be faster than transferring the data from storage device 120 to memory 115, having processor 110 execute the command on the data in memory 115, and then transfer the data back from memory 115 to storage device 120).

Machine 105 may also include multi-function device 135. Multi-function device 135 may offer the functions of multiple devices. For example, in FIG. 1, multi-function device 135 may include storage device 120 and network interface device 140. Storage device 120 may be any variety of storage device. Network interface device 140 may be any sort of network interface device. For example, network interface device 140 may be a network interface card, a wireless connection point (such as a Wi-Fi^{®} or Bluetooth^{®} transmitter and/or receiver. Wi-Fi is a registered trademark of Wireless Ethernet Compatibility Alliance, Inc. in the United States and other countries; Bluetooth is a registered trademark of Bluetooth Sig, Inc. in the United States and other countries), or any other mechanism or component that may support the transmission and/or reception of content.

Multi-function device 135 may appear to machine 105 to offer both the functionalities of storage device 120 and network interface device 140. Thus, processor 110 may issue commands to access data from multi-function device 135 as though it was storage device 120, and may issue commands to send or receive data via network interface device 140 as though it was network interface device 140. Multi-function device 135 may achieve this result by exposing functions to machine 105 that machine 105 may then use to access various features of multi-function device 135.

In some embodiments of the disclosure, machine 105 may include device driver 130 for multi-function device 135, rather than device driver for storage device 120 (or another device driver 130 for network interface device 140). In such embodiments of the disclosure, device driver 130 may support all the functions of multi-function device 135, including those of storage device 120 and/or network interface device 140.

In some embodiments of the disclosure, multi-function device 135, storage device 120, and network interface device 140 may be designed to work together. That is, storage device 120 and network interface device 140 may be aware that they are connected to multi-function device 135 rather than being connected to a PCIe bus (and thence to processor 110). But in other embodiments of the disclosure, storage device 120 and/or network interface device 140 may be off-the-shelf components that may be connected to multi-function device 135. In such embodiments of the disclosure, storage device 120 and/or network interface device 140 may not be aware that multi-function device 135 is between them and processor 110. That is, storage device 120 and/or network interface device 140 may think they are communicating with processor 110, even though requests may be passing through multi-function device 135 (or even originating at multi-function device 135).

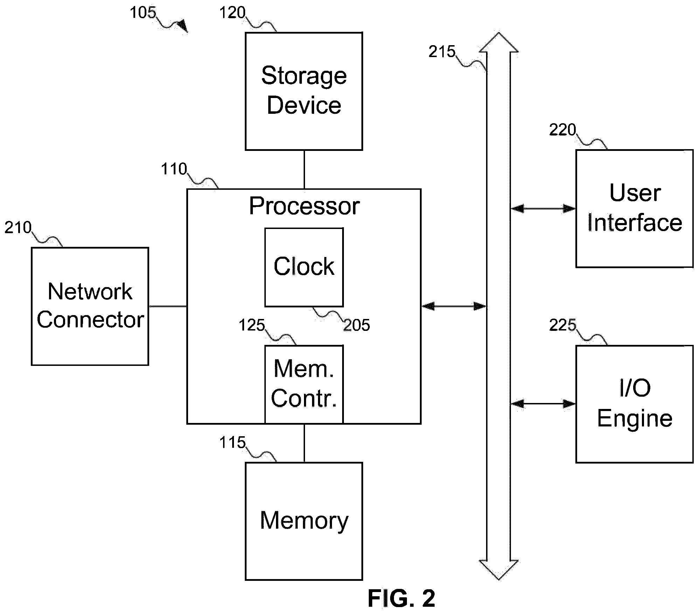

FIG. 2 shows details of the machine 105 of FIG. 1, according to embodiments of the disclosure. In FIG. 2, typically, machine 105 includes one or more processors 110, which may include memory controllers 120 and clocks 205, which may be used to coordinate the operations of the components of the machine. Processors 110 may also be coupled to memories 115, which may include random access memory (RAM), read-only memory (ROM), or other state preserving media, as examples. Processors 110 may also be coupled to storage devices 125, and to network connector 210, which may be, for example, an Ethernet connector or a wireless connector. Processors 110 may also be connected to buses 215, to which may be attached user interfaces 220 and Input/Output (I/O) interface ports that may be managed using I/O engines 225, among other components.

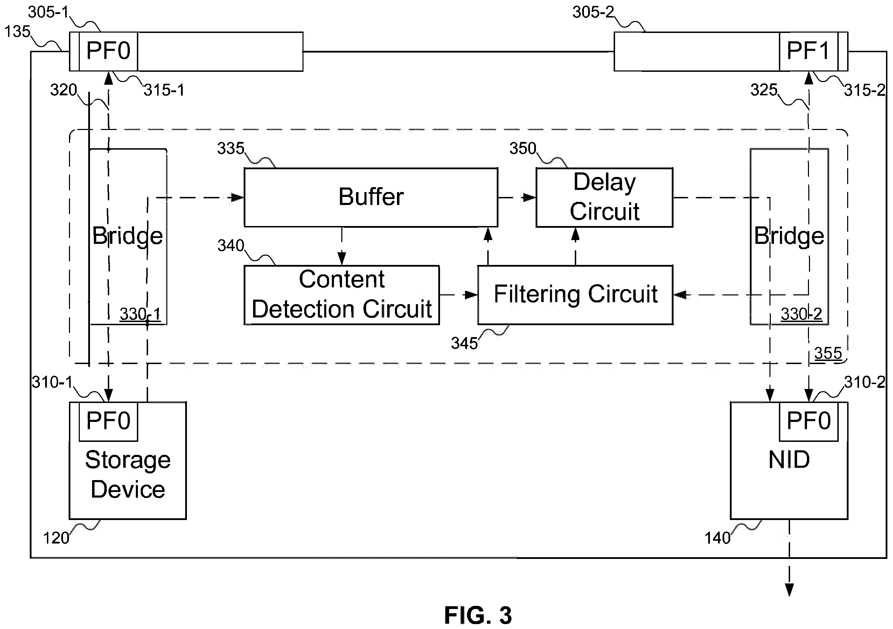

FIG. 3 shows details of multi-function device 135 of FIG. 1, according to embodiments of the disclosure. In FIG. 3, multi-function device 135 may include interfaces 305-1 and 305-2 (which may be referred to collectively as interfaces 305). Interface 305-1 may be used to send requests to storage device 120, and interface 305-2 may be used to send requests to network interface device 140.

Interfaces 305 should not be thought of as separate physical interfaces (although some embodiments of the disclosure may use separate physical interfaces for storage device 120 and network interface 140). Rather, interfaces 305 may be thought of as different functions exposed by multi-function device 135 over a single physical interface to machine 105 of FIG. 1. For example, as described in U.S. Patent Application Serial No. 18/074,360, filed December 2, 2022, currently pending and incorporated by reference herein for all purposes, storage device 120 and network interface device 140 may each expose various functions. For example, storage device 120 may expose one function to write data to storage device 120 and another function to read data from storage device 120 (other functions may also be exposed as well). Function 310-1 is an example of such a function. Similarly, network interface device 140 may expose functions, such as function 310-2. (Functions 310-1 and 310-2, as exposed by storage device 120 and/or network interface device 140, may be referred to collectively as functions 310.) Multi-function device 135 may expose functions through interfaces 305 that correspond to these functions exposed by storage device 120 and network interface device 140, such as functions 315-1 and 315-2 (which may be referred to collectively as functions 315). When processor 110 of FIG. 1 wants to use a function of storage device 120, processor 110 of FIG. 1 may trigger the appropriate function exposed by multi-function device 135, which may then trigger the appropriate function exposed by storage device 120, as shown by dashed line 320. Similarly, when processor 110 of FIG. 1 wants to use a function of network interface device 140, processor 110 of FIG. 1 may trigger the appropriate function exposed by multi-function device 135, which may then trigger the appropriate function exposed by network interface device 140, as shown by dashed line 325. These functions, exposed by storage device 120/network interface device 140, may be determined by multi-function device 135 and corresponding functions may be exposed to machine 105 of FIG. 1 by multi-function device 135, which is shown as interfaces 305.

Note that functions 310-1 and 310-2 as exposed by storage device 120 and network interface device 140 are each identified as Physical Function (PF) 0, whereas functions 315-1 and 315-2 as exposed by multi-function device 135 as PF 0 and PF 1. The reason for this change in numbering is that each device may start its numbering at 0. Storage device 120 and network interface device 140 may number their functions without regard to the other device. But since multi-function device may receive requests to perform functions on behalf of both storage device 120 and network interface device 140, some functions may be renumbered to avoid collisions (if multi-function device 135 exposes two different functions numbered PF 0, multi-function device 135 might not be able to determine whether the corresponding function was on storage device 120 or network interface device 135). By renumbering some functions, multi-function device 135 may be able to uniquely identify which function processor 110 of FIG. 1 is asking to be triggered, and can then trigger the corresponding function of the appropriate device.

In some embodiments of the disclosure, multi-function device 135 may expose other functions that are unique to multi-function device 135 (that is, functions that do not correspond to functions of either storage device 120 or network interface device 140. For example, as discussed in U.S. Patent Application Serial No. 18/074,360, filed December 2, 2022,, multi-function device may support various functions, such as transcoding a content stream from a format used to store the content to a format that the recipient may receive. Such functions may include encryption or compression of the content stream, to name two examples: other functions may also be supported. Since such functions may be functions of multi-function device 135 rather than of storage device 120 or network interface device 140, multi-function device 135 may expose such functions as well (not shown in FIG. 3), which might not be mapped to functions of either storage device 120 or network interface device 140.

Multi-function device 135 may include bridges 330-1 and 330-2 (which may be referred to collectively as bridges 330). Bridges 330 may act as pass-through devices for delivering requests and responses between processor 110 of FIG. 1 and storage device 120/network interface device 140. For example, if machine 105 of FIG. 1 uses a PCIe bus to communicate with multi-function device 135 (and therefore to communicate with storage device 120 and/or network interface device 140), bridges 330 may be PCIe-to-PCIe bridges (since storage device 120 and/or network interface device 140 may expect to be connected to a PCIe bus); in other embodiments of the disclosure, bridges 330 may support communication using other buses and/or protocols.

By including multi-function device 135 (and bridges 330) in machine 105 of FIG. 1, multi-function device 135 may enable certain functionalities. For example, when machine 105 wants to deliver content to a client, normally the content is loaded into memory 115 of FIG. 1, then delivered to network interface device 140. This sequence of operations involves an extra step: the content experiences a stop in memory 115 of FIG. 1. Because multi-function device 135 is connected to (or includes) both storage device 120 and network interface device 140, content stored on storage device 120 may be delivered directly to network interface device 140 without first being transferred to memory 115 of FIG. 1. By avoiding the content being transferred to memory 115 of FIG. 1, the time required to actually deliver the content may be reduced, and the overall load on memory 115 of FIG. 1 may also be lessened. Overall performance of machine 105 of FIG. 1 may therefore be improved.

When content is to be delivered to a client, processor 110 of FIG. 1 may inform multi-function device 135 of the content to be transferred and the client (for example, a network address/port combination) to receive the content. Processor 110 of FIG. 1 may trigger a function exposed by multi-function device 135 to start this process and to identify the content and the client. This function may be a function unique to multi-function device 135, rather than a function exposed by storage device 120 or network interface device 140 that is mirrored by multi-function device 135.

To handle the delivery of content, multi-function device 135 may trigger the appropriate function, such as function 310-1, to read the content from storage device 120. Note that this request to read the content may originate from multi-function device 135 rather than from processor 110 of FIG. 1. Multi-function device 135 may store the content received from storage device 120 in buffer 335. Buffer 335 may be any form of storage: for example, DRAM or SRAM, among other possibilities. Multi-function device 135 may then trigger a function on network interface device 140 to deliver the content stored in buffer 335 to the client.

In some embodiments of the disclosure, the content to be delivered to the client may fit in buffer 335. But in other embodiments of the disclosure, the content may be larger than buffer 335. For example, if the content is a video streaming of a movie, the overall content size could easily be 100 gigabytes (GB) or more. In such embodiments of the disclosure, the content may be broken into portions, which may be stored in buffer 335 until read by network interface device 140, after which the next portion may be transferred into buffer 335. This process may repeat until the entire content has been transferred.

In some embodiments of the disclosure, it may be desirable to filter the content. Continuing the example of streaming a movie, there may be restrictions on what kind of content is to be delivered. These restrictions might be set by the client (for example, a parent might want to filter any violent content or profane language), by the host (for example, machine 105 might want to block any prurient content), or both. Multi-function device may be configured to perform such content filtering.

Multi-function device 135 may include content detection circuit 340 and filtering circuit 345. Content detection circuit 340 may identify what types of content are found in the portion of the content stream currently stored in buffer 335. Content detection circuit 340 may implement, for example, one or more artificial intelligence (AI)/machine learning (ML) models or neural networks, to detect various types of content. Content detection circuit 340 may implement more than one model, as different models may support detecting different types of content. For example, one AI/MI, model might be better suited to detecting violence, whereas another neural network model might be better suited to detecting profane language. Which models are implemented by content detection circuit 340 may depend on machine 105 of FIG. 1. For example, machine 105 of FIG. 1 might require that no prurient content be delivered, in which case a model that may detect prurient content may be needed. But if machine 105 of FIG. 1 permits the delivery of violent content, then a model to detect violent content might be omitted. (Of course, if machine 105 permits the client to impose its own filtering policies in addition to those of machine 105 of FIG. 1, then a model to detect violent content might still be needed.)

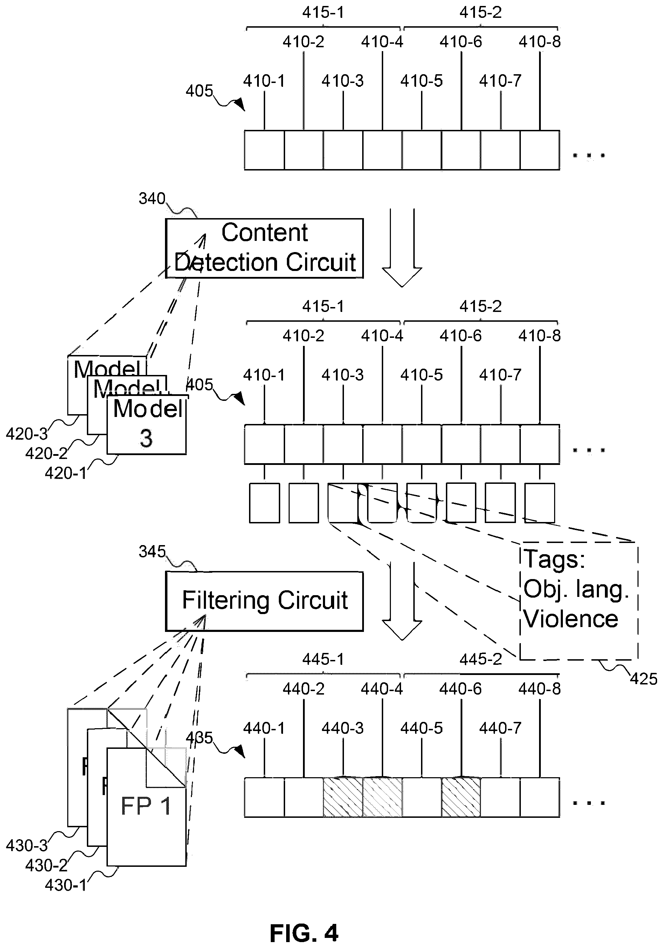

Filtering circuit 345 may then use the information about what types of content were found in the portion of the content stream and apply a filtering policy to the portion of the content. The filtering policy may identify what types of content should be removed and how the portion of the content stream may be modified to remove unacceptable content. Content detection circuit 340 and filtering circuit 345 are discussed further with reference to FIG. 4 below.

When content is to be delivered to a client immediately without filtering, network interface device 140 may read the content from buffer 335 as soon as the content is stored therein. But when filtering is to be performed, the filtering itself may take a little time. To allow for the time needed to perform filtering, multi-function device 135 may include delay circuit 350. Delay circuit 350 may delay the content from being delivered from buffer 335 to network interface device 140 (or alternatively, may delay network interface device 140 from accessing the content from buffer 335) until after filtering has been performed. The interval of delay imposed by delay circuit 350 may be configurable, and any desired delay (from zero seconds, or no delay, upward without limit) may be used. The interval of delay may be set by machine 105 of FIG. 1, by the client, or by any another desired agent.

While FIG. 3 shows multi-function device 135 as including one each of buffer 335, content detection circuit 340, filtering circuit 345, and delay circuit 350, embodiments of the disclosure may support more than one of each component. For example, by including multiple buffers 335, multi-function device 135 may support delivering content to multiple clients in parallel. These content may be the same or different: for example, the same movie might be delivered to multiple clients, or different movies might be delivered to multiple clients.

Each buffer 335 may have its own associated content detection circuit 340, filtering circuit 345, and/or delay circuit 350. In such embodiments of the disclosure, each content may be filtered using different filtering policies. In general, each content detection circuit 340 may operate according to similar principles and using similar models, since the types of content that might be found in a content stream tend to be the same. But in some embodiments of the disclosure, different content detection circuits 340 may function differently. For example, one buffer 335 might be used to buffer audiovisual content, whereas another buffer 335 might be used to buffer only audio content. The content detection circuit 340 associated with the latter buffer 335 might not need to support detecting violent or prurient content, which is typically visual content rather than audio content. In general, each filtering circuit 345 may also operate according to similar principles and using similar models, but might apply different filtering policies that may identify what content should be removed from the content stream. In general, each delay circuit 350 may also operate according to similar principle and using similar models, but might apply different intervals of delay.

In some embodiments of the disclosure, bridges 330, buffer 335, content detection circuit 340, filtering circuit 345, and delay circuit 350 may be implemented as a unit, shown as processing circuit 355. Processing circuit 355 may be implemented using any desired implementation, including a Field Programmable Gate Array (FPGA), an Application-Specific Integrated Circuit (ASIC), a System-on-a-Chip (SoC), a single core processor or a multi-core processor, a Central Processing Unit (CPU), a Graphics Processing Unit (GPU), a General Purpose GPU (GPGPU), a Tensor Processing Unit (TPU), or a Neural Processing Unit (NPU), among other possibilities. In other embodiments of the disclosure, bridges 330, buffer 335, content detection circuit 340, filtering circuit 345, and delay circuit 350 may each be implemented separately and interconnected. In such embodiments of the disclosure, bridges 330, buffer 335, content detection circuit 340, filtering circuit 345, and delay circuit 350 may each be implemented using an FPGA, ASIC, SoC, single core or multi-core processor, CPU, GPU, GPGPU, TPU, or NPU, among other possibilities. In addition, each component may be implemented using the same or different structures: for example, bridges 330 might be implemented as SoCs, whereas buffer 335 may be implemented using DRAM, and content detection circuit 340 and filtering circuit 345 may be implemented as FPGAs. All combinations that may be used to implement multi-function device 135 are considered to be covered by embodiments of the disclosure.

FIG. 4 shows a content stream being processed by content detection circuit 340 of FIG. 3 and filtering circuit 345 of FIG. 3, according to embodiments of the disclosure. In FIG. 4, content stream 405 is shown. Content stream 405 may be one of any number of content stream stored on storage device 120 of FIG. 1. Content stream 405 may be divided into frames 410-1 through 410-8, which may be organized into scenes 415-1 and 415-2. (Frames 410-1-410-8 may be referred to collectively as frames 410; scenes 415-1 and 415-2 may be referred to collectively as scenes 415.) While FIG. 4 shows content stream 405 as including eight frames 410 and two scenes 415, embodiments of the disclosure may include any number of frames and/or scenes, without limitation. In addition, while the terms "images", "frames" and "scenes" are typically associated with video content, audio content and other forms of content may also be divided up into portions, albeit using different terminology (for example, for audio content, the term "frame" might be replaced with some interval of audio content, such as one second of audio content, and the term "scene" might be replaced with "track"). For purposes of this discussion, the terms "frame" and "scene" are intended to apply to any content stream, and not just video content.

Content stream 405 may also be divided into portions. These portions of content stream 405 may be sized to fit into buffer 335 of FIG. 3, or they may be determined by how much content may be processed by content detection circuit 340 at one time. Each portion may include one or more frames and/or scenes. In addition, the division of content stream 405 into portions may permit more than one portion of content stream 405 to be stored in buffer 335 of FIG. 3. For example, buffer 335 of FIG. 3 might be large enough to store both of scenes 415-1 and 415-2. For purposes of FIG. 4, each frame 410 may be considered a separate portion of content stream 405; but this assumption is merely for explanatory purposes, and a portion of content stream 405 may include more than one frame 410.

Content detection circuit 340 may examine each portion of content stream 405. Content detection circuit may apply models 420-1 through 420-3 (which may be referred to collectively as models 420) to determine what types of content may be found in a portion of content stream 405. As discussed with reference to FIG. 3 above, each model 420 may be designed to detect particular types of content, and models 420, working together, may identify what types of content are in a particular portion of content stream 405. Note that any portion of content stream 405 may have zero, one, or more different types of content. For example, one portion of content stream 405 might not have any type of content (as might occur during a fade out transition between different scenes 415), whereas another portion of content stream 405 might have both violent content and profane language (as might occur in a scene where people are shooting and cursing each other).

When content detection circuit 340 detects any particular type of content in a portion of content stream 405, content detection circuit 340 may tag that portion of content stream 405 to indicate that the content type has been detected. For example, tag 425 is shown as attached to portion 410-3 of content stream 405, indicating that portion 410-3 includes both objectionable language and violent content; other portions of content stream 405 may be similarly tagged. In some embodiments of the disclosure, tag 425 may be stored with content stream 405 (for example, in buffer 335 of FIG. 3); in other embodiments of the disclosure, content detection circuit 340 may deliver tag 425 (and any other tags for other portions of content stream 405) to filtering circuit 345 separately. Note that by storing tag 425 on storage device 120 of FIG. 1 associated with the portion of content stream 405, content detection circuit 340 may be omitted in future deliveries of content stream 405: tag 425 (and any other tags associated with other portions of content stream 405) may be retrieved from storage device 120 of FIG. 1 and used by filtering circuit 345 without first applying content detection circuit 340.

Note that content detection circuit 340 does not necessarily filter content stream 405 itself: what portions of content stream 405 are to be filtered is determined by the appropriate filtering policy to be applied to content stream 405. But content detection circuit 340 plays its role in identifying what types of content may be found in individual portions of content stream 405, so that filtering circuit 345 may then filter out the appropriate portions of content stream 405.

In some embodiments of the disclosure, content detection circuit 340 may operate on data as stored in buffer 335 of FIG. 3. In effect, content detection circuit 340 may operate in real time, as data is pending delivery to a client. But what types of content are to be found in a portion of content stream 405 is a relatively static concept: if there is violent content then there is violent content, if there is profane language there is profane language, and so on. The types of content found in content stream 405 might not change over time unless the content itself is changed. For content such as a movie, such change is generally infrequent, and probably never occurs. Therefore, content detection circuit 340 may operate to identify and tag portions of content stream 405 in advance of any client requesting content stream 405. That is, content detection circuit 340 may process content stream 405 to identify what types of content may be found in portions of content stream 405. Tags 425 may then be stored associated with portions of content stream 405 on storage device 120 of FIG. 1 in advance of any client requesting content stream 405. Then, when a client requests content stream 405, tags 425 may be retrieved with the portions of content stream 405 so that filtering circuit 345 may apply the appropriate filters to content stream 405. But in some embodiments of the disclosure, new models 420 may be added, or existing models 420 may be updated, to identify new types of content. If new models 420 are added or existing models 420 are updated, then portions of content stream 405 may be analyzed anew by content detection circuit 340 to update tags 425 that might have been previously stored, to reflect the changes in what types of content may be identified in the portions of content stream 405.

Regardless of when or how content detection circuit 340 identifies types of content in portions of content stream 405, filtering circuit 345 may then use tags 425 to determine what portions of content stream 405 are to be filtered. As discussed with reference to FIG. 3 above, different machines 105 of FIG. 1 and/or different clients might require different filtering to be performed. For example, machine 105 of FIG. 1 might require that all prurient content be filtered, whereas a particular client might want violent content and/or objectionable language filtered for delivery to a minor. Thus, filtering circuit 345 may implement one of any number of filtering policies. In FIG. 4, filtering circuit 345 is shown as supporting filtering policies 430-1 through 430-3 (which may be referred to collectively as filtering policies 430), but filtering circuit 345 may support any number, without limit, of filtering policies 430. Each filtering policy 430 may identify what types of content are to be filtered. So, for example, filtering policy 430-1 might specify that prurient content is to be removed, whereas filtering policy 430-2 might specify that violent content and profane language are to be removed. In some embodiments of the disclosure, filtering circuit 345 may apply more than one filtering policy 430 at any time, and any portion of content stream 405 that contains a type of content covered by any applied filtering policy 430 may be removed. In other embodiments of the disclosure, filtering circuit 345 may apply only one filtering policy, which may specify exactly what type(s) of content are to be filtered from portions of content stream 405. Thus, continuing the above example, a single filtering policy 430 might indicate that any content that is prurient, violent, or includes profane language is to be removed.

Filtering policies 430 may be structured in any desired manner, and any logical expression of what content is to be filtered may be used. For example, filtering policy 430 might specify that content that is either violent or contains profane language is to be filtered, but content that is both violent and contains profane language should not be filtered. (That such a filtering policy would not appear practical is not relevant to this example: it is left to the reader to imagine why such a filtering policy might be desired.)

By examining each portion of content stream 405 and its tag 425, filtering circuit 345 may determine what content is permitted to pass through and what content is to be filtered. For example, after applying filtering policies 430, filtering circuit 345 may produce filtered content stream 435. Like content stream 405, filtered content stream 435 may include frames 440-1 through 440-8, which may be organized into scenes 445-1 and 445-2. (Frames 440-1 through 440-8 may be referred to collectively as frames 440; scenes 445-1 and 445-2 may be referred to collectively as scenes 445.) While FIG. 4 shows content stream 435 as including eight frames 440 and two scenes 445, embodiments of the disclosure may include any number of frames and/or scenes, without limitation.

As a result of the operation of filtering circuit 345, some portions of filtered content stream 435 may be unchanged, and some portions of filtered content stream 435 may be changed. For example, in FIG. 4, frames 410-1, 410-2, 410-5, 410-7, and 410-8 are shown as unchanged frames 440-1, 440-2, 440-5, 440-7, and 440-8 in filtered content stream 435, as shown by the lack of crosshatching in these frames. On the other hand, frames 410-3, 410-4, and 410-6 in filtered content stream 435 have been filtered, as shown by the crosshatching in frames 440-3, 440-4, and 440-6. Embodiments of the disclosure are not limited with respect to what portions of content stream 405 are changed in filtered content stream 435: in some embodiments of the disclosure no portions of filtered content stream 435 may have been changed, whereas in other embodiments of the disclosure all (or virtually all) portions of filtered content stream 435 may have been changed.

Filtering circuit 345 may also determine how to change portions of filtered content stream 435, such as frames 440-3, 440-4, and 440-6. In some embodiments of the disclosure, filtering circuit 345 might simply delete the portions of content stream 405 that are tagged as containing content to be filtered. In other embodiments of the disclosure, filtering circuit 345 might replace the portions of content stream 405 that are tagged as containing content to be filtered with alternative content (for example, by replacing those portions with a screen that says "filtered content"). In yet other embodiments of the disclosure, if enough information is provided regarding where the type of content may be found within the portion, a sub-portion of the content might be modified (for example, by pixelating video or bleeping audio), but the rest of the portion of the content stream might be left unchanged.

In the above discussion, the focus is on filtering a single content stream 405. In some embodiments of the disclosure, the user might be accessing a single content stream 405. But in other embodiments of the disclosure, the user might actually access multiple content streams in parallel. For example, instead of a movie being stored as a single audio-visual content stream, the movie might be stored as multiple content streams: one for the video, one for the audio, one for background music, one for closed captions/open captions, etc. In this manner, the user may have the option of enabling or disabling specific portions of the content. For example, a person who has difficulty hearing might disable the audio content (the recorded dialog stream, the background music stream, etc.) and might enable the closed captions/open captions content, whereas a person with normal hearing capability might do the reverse. In this manner, the user may customize their experience to their own sensory preferences.

Where multiple content streams are used to present the user with a desired content, each content stream may be processed using a different buffer 335 of FIG. 3, with different content detection circuits 340 and/or filtering circuits 345, or all the selected content streams may be processed using a single buffer 335 of FIG. 3 and a single content detection circuit 340/single filtering circuit 345. All possible variations between these two options are also possible.

But where a single content 405 may be delivered using multiple content streams, synchronization across the content streams may be important. For example, if there is one second of audio in the audio content stream that is removed by filtering circuit 345 but the corresponding second of video in the video content stream is not removed, the audio and video might become unsynchronized. As unsynchronized audio and video may be distracting to the user, this result is not desirable.

One solution to avoid unsynchronized content is to ensure that no portion of a content stream is deleted unless the corresponding portions are also deleted from all other content streams. Another solution is to avoid deleting content, and instead replace the content with blank space to fill the appropriate interval (in which case one portion of the content stream is temporarily interrupted but resumes at the correct time in synch with the other content streams). A third solution is for filtering circuit 345, when it identifies content to be filtered in one content stream, to notify other filtering circuits 345 processing other content streams that are part of that overall content to remove the corresponding portions of their content streams.

Yet another solution is for filtering circuit 345 to delete the appropriate portion of its content stream and leave it to another element to ensure content delivery remains synchronized. For example, each portion of content, or at some appropriate intervals (for example, every second, five seconds, or 10 seconds of content) may have an associated time marker (or some other indicator that may be used to ensure content across streams is appropriately synchronized). Bridge 330-2 or delay circuit 350 may then use these time markers to ensure that content remains synchronized. If one content stream reaches a particular time marker before other content streams, delivery of that content stream may be delayed until all content streams have reached that time marker, which may keep the content streams synchronized (or return them to synchronization if they are not currently synchronized).

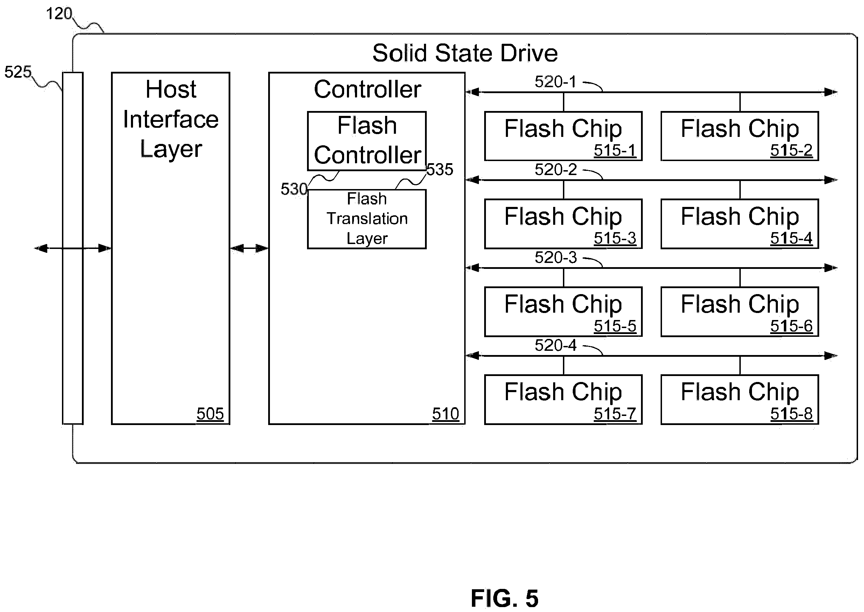

FIG. 5 shows details of storage device 120 of FIG. 1, according to embodiments of the disclosure. In FIG. 5, the implementation of storage device 120 is shown as for a Solid State Drive (SSD), but embodiments of the disclosure may include other implementations, such as a hard disk drive. In FIG. 5, storage device 120 may include host interface layer (HIL) 505, controller 510, and various flash memory chips 515-1 through 515-8 (also termed "flash memory storage"), which may be organized into various channels 520-1 through 520-4. Host interface layer 505 may manage communications between storage device 120 and other components (such as processor 110 of FIG. 1). Host interface layer 505 may also manage communications with devices remote from storage device 120: that is, devices that are not considered part of multi-function device 135 of FIG. 1, but in communication with storage device 120: for example, over one or more network connections. These communications may include read requests to read data from storage device 120, write requests to write data to storage device 120, and delete requests to delete data from storage device 120.

Host interface layer 505 may manage an interface across only a single port, or it may manage interfaces across multiple ports. Alternatively, storage device 120 may include multiple ports, each of which may have a separate host interface layer 505 to manage interfaces across that port. Embodiments of the inventive concept may also mix the possibilities (for example, an SSD with three ports might have one host interface layer to manage one port and a second host interface layer to manage the other two ports). Host interface layer 505 may communicate with other components across connection 525, which may be, for example, a PCIe connection, an M.2 connection, a U.2 connection, a SCSI connection, or a SATA connection, among other possibilities.

Controller 510 may manage the read and write operations, along with garbage collection and other operations, on flash memory chips 515-1 through 515-8 using flash memory controller 530. SSD controller 510 may also include flash translation layer 535. Flash translation layer 535 may manage the mapping of logical block addresses (LBAs) (as used by host 105 of FIG. 1) to physical block addresses (PBAs) where the data is actually stored on storage device 120. By using flash translation layer 535, host 105 of FIG. 1 does not need to be informed when data is moved from one block to another within storage device 120.

While FIG. 5 shows storage device 120 as including eight flash memory chips 515-1 through 515-8 organized into four channels 520-1 through 520-4, embodiments of the inventive concept may support any number of flash memory chips organized into any number of channels. Similarly, while FIG. 5 shows the structure of a SSD, other storage devices (for example, hard disk drives) may be implemented using a different structure from that shown in FIG. 5 to manage reading and writing data, but with similar potential benefits.

While FIG. 5 shows storage device 120 as being just a storage device, embodiments of the disclosure may include other components within storage device 120. For example, storage device 120 might include, or have associated with it, a computational storage unit or accelerator, which may support near-data processing. The computational storage unit or accelerator may be used by processor 110 of FIG. 1 (or other devices attached to multi-function device 135 of FIG. 1) to perform various operations.

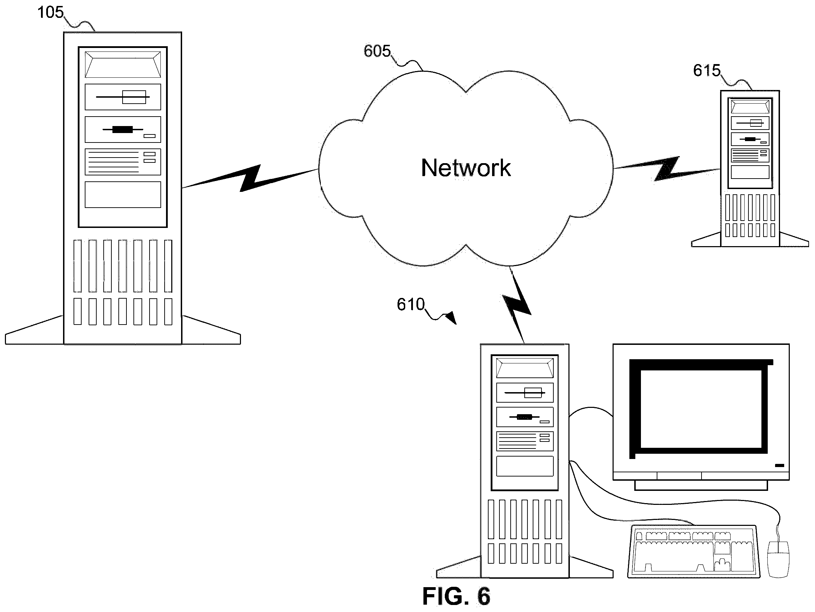

FIG. 6 shows machine 105 of FIG. 1 communicating with a source machine and/or a client, according to embodiments of the disclosure. In FIG. 6, machine 105 is shown connected to network 605. Network 605 may be any variety of network, including a Local Area Network (LAN), Wide Area Network (WAN), Metropolitan Area Network (MAN), or a global network, such as the Internet. Network 605 may be implemented using wired network connections, such as Ethernet connections, or wireless connections supporting any form of wireless communication. Network 605 may also include any desired combinations of the above network types, mixing wired and wireless networks and/or mixing different network varieties.

Client 610 is also shown as connected to network 605. Client 610 may request content be streamed from machine 105 across network 605, and machine 105 may deliver the requested content (which may be filtered) to client 610.

FIG. 6 also shows source machine 615. In some embodiments of the disclosure, client 610 may request content from machine 105 that is not currently stored on machine 105. While machine 105 might be able to redirect the request to a machine that stores the content, such as source machine 615, in some embodiments of the disclosure it may be desired to transfer the content from source machine 615 to machine 105, and then to deliver the content to client 610. For example, client 610 might just be the first of many clients to request the content from machine 105, or where machine 105 and client 610 are relatively close to each other, whereas source machine 615 might be relatively remote to client 610. In these cases, it might be more efficient for machine 105 to transfer a copy of the content to machine 105 rather than directing requests for the content to source machine 615.

To transfer the content from source machine 615 to machine 105, the content in question may be transmitted across network 605. Machine 105 may then store the content on storage device 120 of FIG. 1, after which the content may be delivered to client 610 as described above. (Of course, in some embodiments of the disclosure the content may be stored on storage device 120 of FIG. 1 for future uses and also stored in buffer 335 of FIG. 3 for content detection and filtering as described above, to expedite delivery of the content to client 610).

While FIG. 6 shows machine 105, one client 610, and one source machine 615, embodiments of the disclosure may support any number of clients 610 and/or any number of source machines 615 communicating with machine 105 across network 605. Thus, for example, at any time, any number (zero or more) of clients 610 may be requesting content, and at any time, machine 105 may be transferring content from any number (zero or more) of source machines 615.

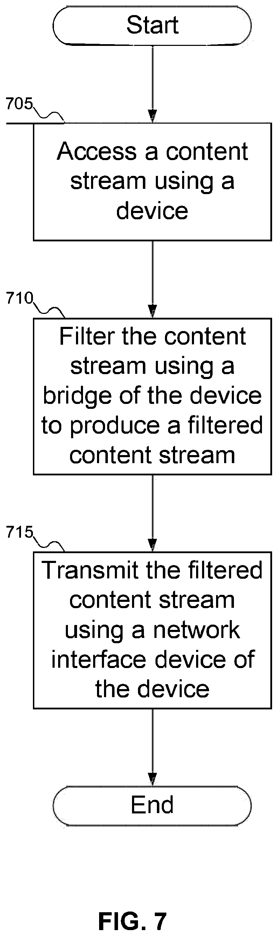

FIG. 7 shows a flowchart of an example procedure for multi-function device 135 of FIG. 1 to filter content stream 405 of FIG. 4, according to embodiments of the disclosure. In FIG. 7, at block 705, multi-function device 135 of FIG. 1 may access content stream 405 of FIG. 4. As discussed above, this access may involve transferring content stream 405 of FIG. 4 (or a portion of content stream 405 of FIG. 4) from storage device 120 of FIG. 1 to buffer 335 of FIG. 3. At block 710, filtering circuit 345 of FIG. 3 may filter content stream 405 of FIG. 4 (or the portion of content stream 405 of FIG. 4) to produce filtered content stream 435 of FIG. 4. Finally, at block 715, network interface device 140 of FIG. 1 may transmit filtered content stream 435 of FIG. 4.

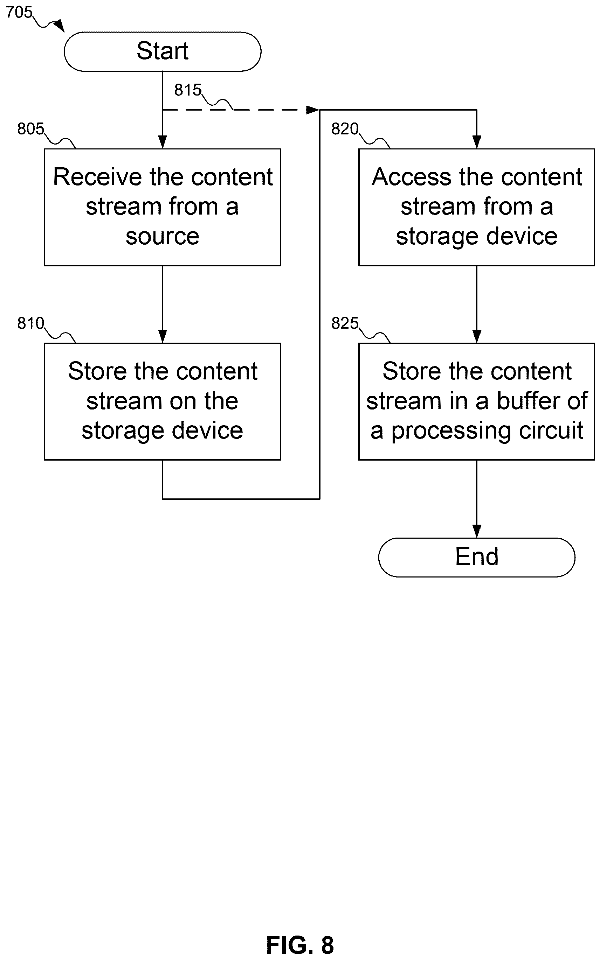

FIG. 8 shows a flowchart of an example procedure for multi-function device 135 of FIG. 1 to access content stream 405 of FIG. 4, according to embodiments of the disclosure. In FIG. 8, at block 805, multi-function device 135 of FIG. 1 may receive content stream 405 of FIG. 4 from source machine 615 of FIG. 6. At block 810, storage device 120 of FIG. 1 may store content stream 405 of FIG. 4. Blocks 805 and 810 may be omitted if content stream 405 of FIG. 4 is already stored on storage device 120 of FIG. 1, as shown by dashed line 815. At block 820, multi-function device 135 of FIG. 1 may access content stream 405 of FIG. 4 from storage device 120 of FIG. 1. Finally, at block 825, multi-function device 135 of FIG. 1 may store content stream 405 of FIG. 4 (or a portion of content stream 405 of FIG. 4) in buffer 335 of FIG. 3 of processing circuit (355) of FIG. 3.

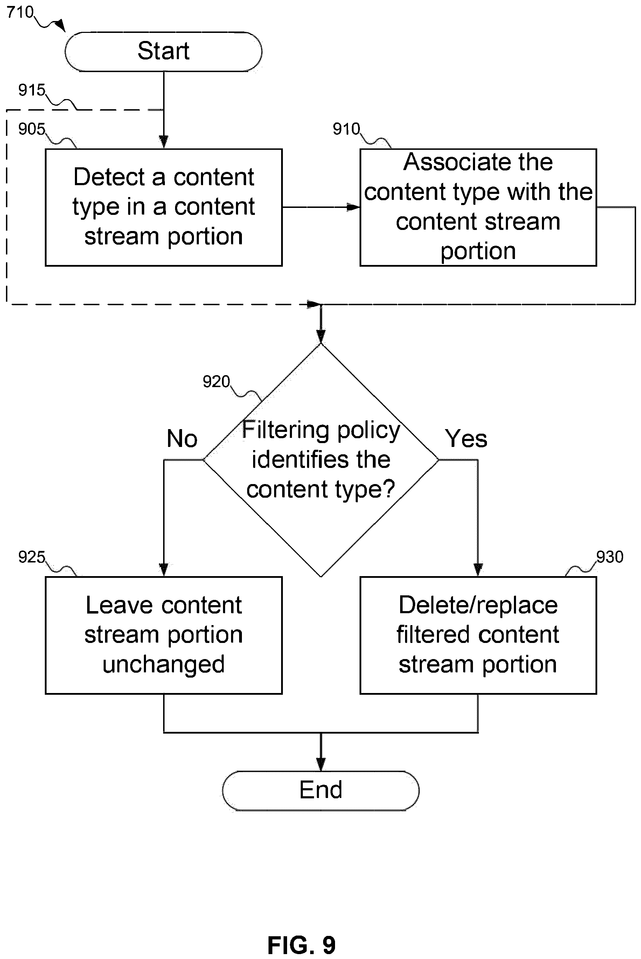

FIG. 9 shows a flowchart of an example procedure for content detection circuit 340 of FIG. 3 to detect content in content stream 405 of FIG. 4, and for filtering circuit 345 of FIG. 3 to filter content stream 405 of FIG. 4, according to embodiments of the disclosure. In FIG. 9, at block 905, content detection circuit 340 of FIG. 3 may detect content type 425 of FIG. 4 in a portion of content stream 405 of FIG. 4. At block 910, content detection circuit 340 of FIG. 3 may associate content type 425 of FIG. 4 with the portion of content stream 405 of FIG. 4. This association may be stored on storage device 120 of FIG. 1, or may be stored locally within content detection circuit 340 of FIG. 3 (for transfer to filtering circuit 345 of FIG. 3). Blocks 905 and 910 may be omitted if content type 425 of FIG. 4 has already been determined and associated with the portion of content stream 405 of FIG. 4-for example, if content type 425 has been stored on storage device 120 of FIG. 1-as shown by dashed line 915.

At block 920, filtering circuit 345 of FIG. 3 may determine if filtering policy 430 of FIG. 4 identifies content type 425 of FIG. 4. This may involve receiving content type 425 of FIG. 4 from content detection circuit 340 of FIG. 3, or accessing content type 425 of FIG. 4 from storage device 120 of FIG. 1, depending on where content type 425 may be currently available. If content type 425 of FIG. 4 is not covered by filtering policy 430 of FIG. 4, then at block 925 filtering circuit 345 of FIG. 3 may leave the portion of content stream 405 unchanged (as shown by, for example, frames 410-1, 410-2, 410-5, 410-7, and 410-8 of FIG. 4 of content stream 405 of FIG. 4 being included unchanged as frames 440-1, 440-2, 440-5, 440-7, and 440-8 of FIG. 4 in filtered content stream 435 of FIG. 4). Otherwise, at block 930, filtering circuit 345 of FIG. 3 may delete, replace, or otherwise modify the portion of content stream 405 to filter out content type 425 of FIG. 4 from content stream 405 of FIG. 4 (as shown by, for example, frames 410-3, 410-4, and 410-6 of FIG. 4 of content stream 405 of FIG. 4 being deleted, replaced, or modified as frames 440-3, 440-4, and 440-6 of filtered content stream 435 of FIG. 4).

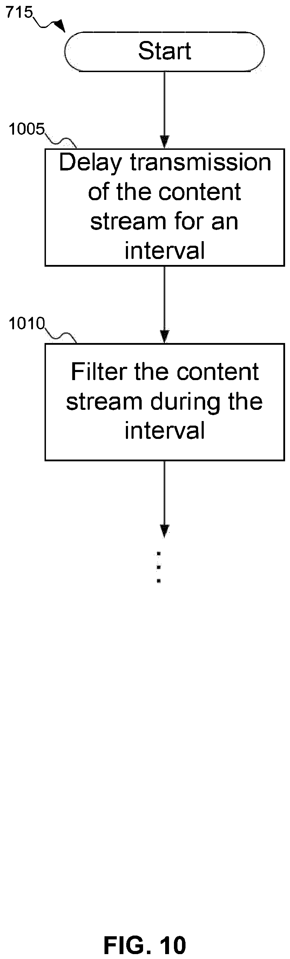

FIG. 10 shows a flowchart of an example procedure for delay circuit 350 of FIG. 3 to delay delivery of content stream 405 of FIG. 4, according to embodiments of the disclosure. In FIG. 10, at block 1005, delay circuit 350 of FIG. 3 may delay transmission of content stream 405 of FIG. 4 for an interval. At block 1010, during that interval, content detection circuit 340 of FIG. 3 and/or filtering circuit 345 of FIG. 3 may be used to filter content stream 405 of FIG. 4.

In FIGs. 7-10, some embodiments of the disclosure are shown. But a person skilled in the art will recognize that other embodiments of the disclosure are also possible, by changing the order of the blocks, by omitting blocks, or by including links not shown in the drawings. All such variations of the flowcharts are considered to be embodiments of the disclosure, whether expressly described or not.

Embodiments of the disclosure include systems and methods for integrating a storage device such as a Solid State Drive (SSD) and a Network Interface Card (NIC) and thereby providing an efficient architecture for streaming content distribution. A Non-Volatile Memory Express (NVMe) controller of the SSD and NIC may be exposed to the host independently using separate PCIe functions (PF/VF). A peer-to-peer (P2P) datapath may be provided between the storage and the NIC. Various features such as inserting delay in the content distribution, filtration of certain content type, etc. may be performed on the data in P2P buffer before transmission.

By providing contents directly from SSD to the NIC for distribution to end users, system resource costs such as host bus bandwidth, host memory bandwidth, CPU cycles, energy spent in moving data, etc. may be saved. Additionally embodiments of the disclosure may provide a lower latency solution for applications such as streaming. As the content data is provided from storage to NIC, higher level functions such as delay insertion, content filtration and inspection, and end-user policy/SLA may be performed in an efficient manner.

In embodiments of the disclosure, a processing element, such as Field Programmable Gate Array (FPGA), an Application-Specific Integrated Circuit (ASIC), a System-on-a-Chip (SoC), or other processor may be used to connect one or more SSD Controllers and/or one or more Network Interface Card (NIC) to the host. The SSD controllers and NIC may be connected to such FPGA using a connector so that different flavors could be connected as needed. In some embodiments of the disclosure, some of the SSD controllers and/or compute resources may be connected in a fixed manner if desirable. In other embodiments of the disclosure, the SSD Controller, P2P Buffer and associated content filter/processing logic, and NIC controllers may be fully integrated in a single processing element. In yet other embodiments of the disclosure, these elements may be connected to each other using techniques such as chiplets in a single package, such as MCP (Multi chip package).

As shown in the diagram above one or more SSD controllers and one or more NIC are exposed to the host through PCIe End Point (EP) Physical Functions (PF) or Virtual Functions (VF) in a transparent manner using PCIe-PCIe bridge. The SSD controllers and NIC may connect to the FPGA using a PCIe Root Port (RP). The FPGA logic may perform PCIe pass-through of the host and device interactions and host protocols. That is to say, the host system software stack, such as SSD device driver and NIC drivers, and application frameworks, such as web servers, content servers etc., may directly talk to the SSD controller and NIC through the FPGA. This connection may facilitate easy integration of the device into existing application software stacks. This architecture may enable control plane in the host at the same data plane in the device.

In other embodiments of the disclosure, the device may have other host interfaces, such as Ethernet, TCP/IP, RDMA, NVMe-oF, UFS, eMMC, SAS, SATA, and so on instead of PCIe. Similarly, in yet other embodiments of the disclosure, the FPGA interface to the SSD Controller and NIC may use other protocols, such as Ethernet, TCP/IP, RDMA, NVMe-oF, UFS, eMMC, SAS, SATA, and so on. Embodiments of the disclosure may be described with reference to PCIe and NVMe as transport and host protocols for communication between the host and the device, but other transports and host protocols may be used to achieve the optimal data processing operations in the proposed storage device.

The PCIe bridge, which may be a Light Weight Bridge (LWB), may forward all the host PCIe packets and traffic to the SSD Controller and NIC attached to it with appropriate translations if necessary. Similarly the PCIe bridge may forward the PCIe packets and traffic originating from SSD Controller and NIC attached going to the host with appropriate translations if necessary. That is to say, the SSD and the NIC may perform data DMA operations on the host system memory without any interference from the FPGA logic.

The device may provide a peer-to-peer (P2P) data buffer that may be used to transfer media content data between the SSD controller and the NIC directly without sending it to the host memory. Such a P2P data transfer may reduce energy consumed, as well as CPU cycles, host memory bandwidth, and host bus bandwidth. The P2P data transfer may also enable lower latency of content distribution. The P2P buffer may use on-chip SRAM, off-chip DRAM, or any other memory or combination of multiple memory elements.

In some embodiments of the disclosure, the processing element may contain one or more processor cores or logic elements attached to the P2P buffer, to perform certain content detection and filtering operations before content data is provided to the NIC for transmission.

In some embodiments of the disclosure, the P2P buffer content may be delayed by a certain amount of time before being provided to the NIC. The delay time may be specified dynamically by the host or may be a device setting.

In other embodiments of the disclosure, the contents in the P2P buffer may be selectively discarded and not provided to the NIC for transmission to the end users. The host may dynamically instruct the device to discard certain amount contents present in the P2P buffer. In some embodiments of the disclosure, the discard of content may be time based such as 10 seconds or 1 minute etc. In other embodiments of the disclosure, the host may set a discard time window by giving Start Discard and Stop Discard instructions.

In yet other embodiments of the disclosure, the content discard may be performed on the basis of content type detected. The host may program the type of content to be detected in the P2P buffer. The device may include artificial intelligence (AI)/machine learning (ML) based content detection logic to detect objectionable content. If objectionable content is detected, the device may discard that content automatically. In other embodiments of the disclosure, the device may maintain statistics of such content detected, and may also inform the host objectionable content has been discarded.

In yet other embodiments of the disclosure, the discard of the content may be based on the metadata related to the content being distributed and the end user preferences and settings. The host may program the discard policy based on the end-user account details into the integrated device. When the content is being provided to the NIC, the processing element logic may check the metadata against the discard policy and may discard the content data as appropriate. The host-programmed discard policy may also be a function of end-user Service Level Agreements (SLAs). Some other discard parameters may include date, time, month, content type detected dynamically, content type based on metadata, end-user id, network parameters such as TCP/IP address, MAC address, storage parameters such as Namespace ID, NVM set identifiers, submission queue (SQ)/completion queue (CQ) identifiers, a host identifier, etc.

An example of such end-user content discard policy might be "Do not stream content between 10 pm and 7 am". Another example of end-user discard policy might be "Do not stream R- (or higher-) rated contents". Such content distribution policy check and enforcement at the source of the data, which is SSD, may prevent unnecessary Content Distribution Network (CDN) traffic in the network, thereby reducing congestion in the network.

Various filtering operations on the data contained in the P2P buffer as described above may be performed under device direction without the host getting involved. In some embodiments of the disclosure, the FPGA based content filtering steps may be performed under host direction. The host may provide such instructions using host bus interface to one or more PCIe functions.

The following discussion is intended to provide a brief, general description of a suitable machine or machines in which certain aspects of the disclosure may be implemented. The machine or machines may be controlled, at least in part, by input from conventional input devices, such as keyboards, mice, etc., as well as by directives received from another machine, interaction with a virtual reality (VR) environment, biometric feedback, or other input signal. As used herein, the term "machine" is intended to broadly encompass a single machine, a virtual machine, or a system of communicatively coupled machines, virtual machines, or devices operating together. Exemplary machines include computing devices such as personal computers, workstations, servers, portable computers, handheld devices, telephones, tablets, etc., as well as transportation devices, such as private or public transportation, e.g., automobiles, trains, cabs, etc.

The machine or machines may include embedded controllers, such as programmable or non-programmable logic devices or arrays, Application Specific Integrated Circuits (ASICs), embedded computers, smart cards, and the like. The machine or machines may utilize one or more connections to one or more remote machines, such as through a network interface, modem, or other communicative coupling. Machines may be interconnected by way of a physical and/or logical network, such as an intranet, the Internet, local area networks, wide area networks, etc. One skilled in the art will appreciate that network communication may utilize various wired and/or wireless short range or long range carriers and protocols, including radio frequency (RF), satellite, microwave, Institute of Electrical and Electronics Engineers (IEEE) 802.11, Bluetooth^{®}, optical, infrared, cable, laser, etc.

Embodiments of the present disclosure may be described by reference to or in conjunction with associated data including functions, procedures, data structures, application programs, etc. which when accessed by a machine results in the machine performing tasks or defining abstract data types or low-level hardware contexts. Associated data may be stored in, for example, the volatile and/or non-volatile memory, e.g., RAM, ROM, etc., or in other storage devices and their associated storage media, including hard-drives, floppy-disks, optical storage, tapes, flash memory, memory sticks, digital video disks, biological storage, etc. Associated data may be delivered over transmission environments, including the physical and/or logical network, in the form of packets, serial data, parallel data, propagated signals, etc., and may be used in a compressed or encrypted format. Associated data may be used in a distributed environment, and stored locally and/or remotely for machine access.

Embodiments of the disclosure may include a tangible, non-transitory machine-readable medium comprising instructions executable by one or more processors, the instructions comprising instructions to perform the elements of the disclosures as described herein.

The various operations of methods described above may be performed by any suitable means capable of performing the operations, such as various hardware and/or software component(s), circuits, and/or module(s). The software may comprise an ordered listing of executable instructions for implementing logical functions, and may be embodied in any "processor-readable medium" for use by or in connection with an instruction execution system, apparatus, or device, such as a single or multiple-core processor or processor-containing system.

The blocks or steps of a method or algorithm and functions described in connection with the embodiments disclosed herein may be embodied directly in hardware, in a software module executed by a processor, or in a combination of the two. If implemented in software, the functions may be stored on or transmitted over a tangible, non-transitory computer-readable medium. A software module may reside in Random Access Memory (RAM), flash memory, Read Only Memory (ROM), Electrically Programmable ROM (EPROM), Electrically Erasable Programmable ROM (EEPROM), registers, hard disk, a removable disk, a CD ROM, or any other form of storage medium known in the art.

Having described and illustrated the principles of the disclosure with reference to illustrated embodiments, it will be recognized that the illustrated embodiments may be modified in arrangement and detail without departing from such principles, and may be combined in any desired manner. And, although the foregoing discussion has focused on particular embodiments, other configurations are contemplated. In particular, even though expressions such as "according to an embodiment of the disclosure" or the like are used herein, these phrases are meant to generally reference embodiment possibilities, and are not intended to limit the disclosure to particular embodiment configurations. As used herein, these terms may reference the same or different embodiments that are combinable into other embodiments.

The foregoing illustrative embodiments are not to be construed as limiting the disclosure thereof. Although a few embodiments have been described, those skilled in the art will readily appreciate that many modifications are possible to those embodiments without materially departing from the novel teachings and advantages of the present disclosure. Accordingly, all such modifications are intended to be included within the scope of this disclosure as defined in the claims.

Embodiments of the disclosure may extend to the following statements, without limitation:
Statement 1. An embodiment of the disclosure includes a device, comprising:
   a storage device storing a content stream;
   a network interface device to transmit a filtered content stream; and
   a processing circuit connected to the storage device and the network interface device,
   wherein the processing circuit is configured to apply a filtering policy to the content stream to produce the filtered content stream.
Statement 2. An embodiment of the disclosure includes the device according to statement 1, wherein the storage device includes a Solid State Drive (SSD).
Statement 3. An embodiment of the disclosure includes the device according to statement 1, wherein the network interface device includes a network interface card.
Statement 4. An embodiment of the disclosure includes the device according to statement 1, wherein the network interface device is configured to transmit the filtered content stream to a client.
Statement 5. An embodiment of the disclosure includes the device according to statement 1, wherein:
   the processing circuit includes:
   a buffer to store a first content stream portion, the content stream including the first content stream portion and a second content stream portion; and
   a filtering circuit, the filtering circuit configured to apply the filtering policy to the first content stream portion to produce a filtered content stream portion; and the network interface device is configured to transmit the filtered content stream portion.
Statement 6. An embodiment of the disclosure includes the device according to statement 5, wherein the filtering circuit includes a Field Programmable Gate Array (FPGA), an Application-Specific Integrated Circuit (ASIC), a System-on-a-Chip (SoC), a single core processor or a multi-core processor, a Central Processing Unit (CPU), a Graphics Processing Unit (GPU), a General Purpose GPU (GPGPU), a Tensor Processing Unit (TPU), or a Neural Processing Unit (NPU).
Statement 7. An embodiment of the disclosure includes the device according to statement 5, wherein the processing circuit further includes a second buffer.
Statement 8. An embodiment of the disclosure includes the device according to statement 7, wherein:
   the second buffer stores a third content stream portion; and
   the filtering circuit is configured to apply the filtering policy to the third content stream portion to produce a second filtered content stream portion; and
   the network interface device is configured to transmit the second filtered content stream portion.
Statement 9. An embodiment of the disclosure includes the device according to statement 7, wherein:
   the second buffer stores a third content stream portion;
   the processing circuit further includes a second filtering circuit, the second filtering circuit configured to apply the filtering policy to the third content stream portion to produce a second filtered content stream portion; and
   the network interface device is configured to transmit the second filtered content stream portion.
Statement 10. An embodiment of the disclosure includes the device according to statement 9, wherein the second filtering circuit includes an FPGA, an ASIC, an SoC, a single core processor or a multi-core processor, a CPU, a GPU, a GPGPU, a TPU, or an NPU.
Statement 11. An embodiment of the disclosure includes the device according to statement 9, wherein the network interface device is configured to transmit the second filtered content stream portion based at least in part on transmission of the filtered content stream portion.
Statement 12. An embodiment of the disclosure includes the device according to statement 9, wherein the network interface device is configured to transmit the filtered content stream portion and the second filtered content stream portion to a client.
Statement 13. An embodiment of the disclosure includes the device according to statement 9, wherein the network interface device is configured to transmit the filtered content stream portion to a first client and the second filtered content stream portion to a second client.
Statement 14. An embodiment of the disclosure includes the device according to statement 7, wherein:
   the second buffer stores a third content stream portion, a second content stream including the third content stream portion and a fourth content stream portion;
   the processing circuit further includes a second filtering circuit, the second filtering circuit configured to apply a second filtering policy to the third content stream portion to produce a second filtered content stream portion, a second filtered content stream including the second filtered content stream portion; and
   the network interface device is configured to transmit the second filtered content stream portion.
Statement 15. An embodiment of the disclosure includes the device according to statement 14, wherein the second filtering circuit includes an FPGA, an ASIC, an SoC, a single core processor or a multi-core processor, a CPU, a GPU, a GPGPU, a TPU, or an NPU.
Statement 16. An embodiment of the disclosure includes the device according to statement 14, wherein the network interface device is configured to transmit the filtered content stream portion to a first client and the second filtered content stream portion to a second client.
Statement 17. An embodiment of the disclosure includes the device according to statement 5, wherein:
   the first content stream portion includes a content type; and
   the filtering policy identifies the content type to be filtered.
Statement 18. An embodiment of the disclosure includes the device according to statement 17, wherein the first content stream portion further includes a second content type.
Statement 19. An embodiment of the disclosure includes the device according to statement 17, wherein the storage device is configured to store the content type associated with the first content stream portion.
Statement 20. An embodiment of the disclosure includes the device according to statement 1, wherein the processing circuit includes a content detection circuit to identify a content type in a first content stream portion, the first content stream including the first content stream portion and a second content stream portion.
Statement 21. An embodiment of the disclosure includes the device according to statement 20, wherein the content detection circuit includes an FPGA, an ASIC, an SoC, a single core processor or a multi-core processor, a CPU, a GPU, a GPGPU, a TPU, or an NPU.
Statement 22. An embodiment of the disclosure includes the device according to statement 20, wherein the content detection circuit is further configured to identify a second content type in the first content stream portion.
Statement 23. An embodiment of the disclosure includes the device according to statement 20, wherein:
   the processing circuit further includes a buffer storing the first content stream portion; and
   the content detection circuit is configured to identify the content type in the first content stream portion based at least in part on the first content stream portion being in the buffer.
Statement 24. An embodiment of the disclosure includes the device according to statement 20, wherein the content detection circuit is configured to identify the content type in the first content stream portion and store the content type on the storage device associated with the first content stream portion.
Statement 25. An embodiment of the disclosure includes the device according to statement 20, the processing circuit further including:
   a second buffer storing a third content stream portion; and
   a second content detection circuit to identify a second content type in the third content stream portion based at least in part on the third content stream portion being in the second buffer.
Statement 26. An embodiment of the disclosure includes the device according to statement 25, wherein the content stream further includes the third content stream portion.
Statement 27. An embodiment of the disclosure includes the device according to statement 25, wherein a second content stream includes the third content stream portion.
Statement 28. An embodiment of the disclosure includes the device according to statement 20, the processing circuit further including a second content detection circuit to identify a second content type in the third content stream portion and to store the second content type associated with the third content stream portion.
Statement 29. An embodiment of the disclosure includes the device according to statement 28, wherein the content stream further includes the third content stream portion.
Statement 30. An embodiment of the disclosure includes the device according to statement 28, wherein a second content stream includes the third content stream portion.
Statement 31. An embodiment of the disclosure includes the device according to statement 1, wherein the filtering policy is one of the filtering policy and a second filtering policy.
Statement 32. An embodiment of the disclosure includes the device according to statement 1, wherein the processing circuit includes a delay circuit to delay the network interface device for an interval before transmitting the filtered content stream.
Statement 33. An embodiment of the disclosure includes the device according to statement 32, wherein the processing circuit is configured to apply the filtering policy during the interval.
Statement 34. An embodiment of the disclosure includes the device according to statement 32, wherein the interval is configurable by a host.
Statement 35. An embodiment of the disclosure includes the device according to statement 1, wherein the storage device is configured to receive the content stream from a source and to store the content stream.
Statement 36. An embodiment of the disclosure includes the device according to statement 1, wherein:
   the content stream includes a content stream portion; and
   the filtering policy specifies to delete the content stream portion from the content stream or to replace the content stream portion in the content stream with a replacement content stream portion in the content stream.
Statement 37. An embodiment of the disclosure includes the device according to statement 1, further comprising:
   a first bridge to permit communication between the storage device and a processor; and
   a second bridge to permit communication between the network interface device and the processor.
Statement 38. An embodiment of the disclosure includes a method, comprising:
   accessing a content stream using a device;
   filtering the content stream using a processing circuit of the device to produce a filtered content stream; and
   transmitting the filtered content stream using a network interface device of the device.
Statement 39. An embodiment of the disclosure includes the method according to statement 38, wherein accessing the content stream using the device includes accessing the content stream from a storage device of the device.
Statement 40. An embodiment of the disclosure includes the method according to statement 39, wherein accessing the content stream from the storage device of the device includes accessing the content stream from a Solid State Drive (SSD) of the device.
Statement 41. An embodiment of the disclosure includes the method according to statement 38, wherein accessing the content stream using the device includes receiving the content stream from a source.
Statement 42. An embodiment of the disclosure includes the method according to statement 41, wherein receiving the content stream from the source includes storing the content stream in a storage device of the device.
Statement 43. An embodiment of the disclosure includes the method according to statement 42, wherein storing the content stream in the storage device of the device includes storing the content stream in a Solid State Drive (SSD) of the device.
Statement 44. An embodiment of the disclosure includes the method according to statement 38, wherein accessing the content stream using the device includes storing the content stream in the processing circuit of the device.
Statement 45. An embodiment of the disclosure includes the method according to statement 44, wherein storing the content stream in the processing circuit of the device includes storing a first content stream portion in the processing circuit of the device, the content stream including the first content stream portion and a second content stream portion.
Statement 46. An embodiment of the disclosure includes the method according to statement 45, wherein storing the first content stream portion in the processing circuit of the device includes storing the first content stream portion in a buffer of the processing circuit of the device.
Statement 47. An embodiment of the disclosure includes the method according to statement 46, wherein filtering the content stream using the processing circuit of the device to produce the filtered content stream includes filtering the first content stream portion in the buffer of the processing circuit of the device to produce a filtered content stream portion.
Statement 48. An embodiment of the disclosure includes the method according to statement 47, wherein transmitting the filtered content stream using the network interface device of the device includes transmitting the filtered content stream portion using the network interface device.
Statement 49. An embodiment of the disclosure includes the method according to statement 48, wherein transmitting the filtered content stream portion using the network interface device includes transmitting the filtered content stream portion using the network interface device to a client.
Statement 50. An embodiment of the disclosure includes the method according to statement 47, wherein filtering the first content stream portion in the buffer of the processing circuit of the device to produce the filtered content stream portion includes filtering the second content stream portion in the buffer of the processing circuit of the device to produce a second filtered content stream portion.
Statement 51. An embodiment of the disclosure includes the method according to statement 50, wherein:
   filtering the first content stream portion in the buffer of the processing circuit of the device to produce the filtered content stream portion includes applying a filtering policy to the first content stream portion in the buffer of the processing circuit of the device to produce the filtered content stream portion; and
   filtering the second content stream portion in the buffer of the processing circuit of the device to produce the second filtered content stream portion includes applying the filtering policy to the second content stream portion in the buffer of the processing circuit of the device to produce the second filtered content stream portion.
Statement 52. An embodiment of the disclosure includes the method according to statement 50, wherein filtering the second content stream portion in the buffer of the processing circuit of the device to produce the second filtered content stream portion includes filtering the second content stream portion in the buffer of the processing circuit of the device to produce the second filtered content stream portion based at least in part on transmission of the filtered content stream portion.
Statement 53. An embodiment of the disclosure includes the method according to statement 52, wherein transmitting the filtered content stream using the network interface device of the device includes transmitting the filtered content stream portion and the second filtered content stream portion using the network interface device.
Statement 54. An embodiment of the disclosure includes the method according to statement 53, wherein transmitting the filtered content stream portion and the second filtered content stream portion using the network interface device includes transmitting the filtered content stream portion and the second filtered content stream portion using the network interface device to a client.
Statement 55. An embodiment of the disclosure includes the method according to statement 47, wherein filtering the first content stream portion in the buffer of the processing circuit of the device to produce the filtered content stream portion includes filtering the second content stream portion in a second buffer of the processing circuit of the device to produce a second filtered content stream portion.
Statement 56. An embodiment of the disclosure includes the method according to statement 55, wherein:
   filtering the first content stream portion in the buffer of the processing circuit of the device to produce the filtered content stream portion includes applying a filtering policy to the first content stream portion in the buffer of the processing circuit of the device to produce the filtered content stream portion; and
   filtering the second content stream portion in the second buffer of the processing circuit of the device to produce the second filtered content stream portion includes applying the filtering policy to the second content stream portion in the second buffer of the processing circuit of the device to produce the second filtered content stream portion.
Statement 57. An embodiment of the disclosure includes the method according to statement 55, wherein:
   filtering the first content stream portion in the buffer of the processing circuit of the device to produce the filtered content stream portion includes applying a first filtering policy to the first content stream portion in the buffer of the processing circuit of the device to produce the filtered content stream portion; and
   filtering the second content stream portion in the buffer of the processing circuit of the device to produce the second filtered content stream portion includes applying a second filtering policy to the second content stream portion in the buffer of the processing circuit of the device to produce the second filtered content stream portion.
Statement 58. An embodiment of the disclosure includes the method according to statement 55, wherein transmitting the filtered content stream using the network interface device of the device includes transmitting the filtered content stream portion and the second filtered content stream portion using the network interface device.
Statement 59. An embodiment of the disclosure includes the method according to statement 58, wherein transmitting the filtered content stream portion and the second filtered content stream portion using the network interface device includes:
   transmitting the filtered content stream portion using the network interface device to a first client; and
   transmitting the second filtered content stream portion using the network interface device to a second client.
Statement 60. An embodiment of the disclosure includes the method according to statement 47, wherein filtering the first content stream portion in the buffer of the processing circuit of the device to produce the filtered content stream portion includes filtering a third content stream portion in a second buffer of the processing circuit of the device to produce a second filtered content stream portion, a second content stream including the third content stream portion and a fourth content stream portion.
Statement 61. An embodiment of the disclosure includes the method according to statement 60, wherein:
   filtering the first content stream portion in the buffer of the processing circuit of the device to produce the filtered content stream portion includes applying a filtering policy to the first content stream portion in the buffer of the processing circuit of the device to produce the filtered content stream portion; and
   filtering a third content stream portion in a second buffer of the processing circuit of the device to produce a second filtered content stream portion includes applying the filtering policy to the third content stream portion in the second buffer of the processing circuit of the device to produce the second filtered content stream portion.
Statement 62. An embodiment of the disclosure includes the method according to statement 60, wherein:
   filtering the first content stream portion in the buffer of the processing circuit of the device to produce the filtered content stream portion includes applying a first filtering policy to the first content stream portion in the buffer of the processing circuit of the device to produce the filtered content stream portion; and
   filtering a third content stream portion in a second buffer of the processing circuit of the device to produce a second filtered content stream portion includes applying a second filtering policy to the third content stream portion in the second buffer of the processing circuit of the device to produce the second filtered content stream portion.
Statement 63. An embodiment of the disclosure includes the method according to statement 60, wherein transmitting the filtered content stream using the network interface device of the device includes transmitting the filtered content stream portion and the second filtered content stream portion using the network interface device.
Statement 64. An embodiment of the disclosure includes the method according to statement 63, wherein transmitting the filtered content stream portion and the second filtered content stream portion using the network interface device includes:
   transmitting the filtered content stream portion using the network interface device to a first client; and
   transmitting the second filtered content stream portion using the network interface device to a second client.
Statement 65. An embodiment of the disclosure includes the method according to statement 44, wherein:
   the first content stream portion includes a content type; and
   filtering the content stream using the processing circuit of the device to produce the filtered content stream includes detecting the content type to be filtered.
Statement 66. An embodiment of the disclosure includes the method according to statement 65, wherein the first content stream portion further includes a second content type.
Statement 67. An embodiment of the disclosure includes the method according to statement 65, wherein filtering the content stream using the processing circuit of the device to produce the filtered content stream further includes accessing the content type from a storage device of the device.
Statement 68. An embodiment of the disclosure includes the method according to statement 65, wherein filtering the content stream using the processing circuit of the device to produce the filtered content stream further includes detecting the content type in the first content stream portion using the processing circuit of the device.
Statement 69. An embodiment of the disclosure includes the method according to statement 68, wherein detecting the content type in the first content stream portion using the processing circuit of the device includes detecting the content type in the first content stream portion using a content detection circuit of the processing circuit of the device.
Statement 70. An embodiment of the disclosure includes the method according to statement 69, wherein the content detection circuit includes an FPGA, an ASIC, an SoC, a single core processor or a multi-core processor, a CPU, a GPU, a GPGPU, a TPU, or an NPU.
Statement 71. An embodiment of the disclosure includes the method according to statement 69, wherein detecting the content type in the first content stream portion using the content detection circuit of the processing circuit of the device includes detecting a second content type in the first content stream portion using the content detection circuit of the processing circuit of the device.
Statement 72. An embodiment of the disclosure includes the method according to statement 69, further comprising detecting the content type in the first content stream portion using a second content detection circuit of the processing circuit of the device.
Statement 73. An embodiment of the disclosure includes the method according to statement 69, further comprising detecting a second content type in the first content stream portion using a second content detection circuit of the processing circuit of the device.
Statement 74. An embodiment of the disclosure includes the method according to statement 69, further comprising detecting the content type in a third content stream portion using a second content detection circuit of the processing circuit of the device, a second content stream including the third content stream portion and a fourth content stream portion.
Statement 75. An embodiment of the disclosure includes the method according to statement 69, further comprising detecting a second content type in a third content stream portion using a second content detection circuit of the processing circuit of the device, a second content stream including the third content stream portion and a fourth content stream portion.
Statement 76. An embodiment of the disclosure includes the method according to statement 68, wherein detecting the content type in the first content stream portion using the processing circuit of the device includes storing the content type in the first content stream portion associated with the first content stream portion in a storage device of the device.
Statement 77. An embodiment of the disclosure includes the method according to statement 38, wherein filtering the content stream using the processing circuit of the device to produce the filtered content stream includes applying a filtering policy to the content stream using the processing circuit of the device to produce the filtered content stream.
Statement 78. An embodiment of the disclosure includes the method according to statement 38, wherein filtering the content stream using the processing circuit of the device to produce the filtered content stream includes filtering the content stream using a filtering circuit in the processing circuit of the device to produce the filtered content stream.
Statement 79. An embodiment of the disclosure includes the method according to statement 78, wherein the filtering circuit includes a Field Programmable Gate Array (FPGA), an Application-Specific Integrated Circuit (ASIC), a System-on-a-Chip (SoC), a single core processor or a multi-core processor, a Central Processing Unit (CPU), a Graphics Processing Unit (GPU), a General Purpose GPU (GPGPU), a Tensor Processing Unit (TPU), or a Neural Processing Unit (NPU).
Statement 80. An embodiment of the disclosure includes the method according to statement 38, wherein filtering the content stream using the processing circuit of the device to produce the filtered content stream includes delaying transmission of the content stream for an interval by the network interface device of the device.
Statement 81. An embodiment of the disclosure includes the method according to statement 80, wherein filtering the content stream using the processing circuit of the device to produce the filtered content stream further includes filtering the content stream using the processing circuit of the device to produce the filtered content stream during the interval.
Statement 82. An embodiment of the disclosure includes the method according to statement 38, wherein:
   the content stream includes a content stream portion; and
   filtering the content stream using the processing circuit of the device to produce the filtered content stream includes replacing the content stream portion of the content stream with a replacement content stream portion.
Statement 83. An embodiment of the disclosure includes the method according to statement 38, wherein:
   the content stream includes a content stream portion; and
   filtering the content stream using the processing circuit of the device to produce the filtered content stream includes deleting the content stream portion from the content stream.
Statement 84. An embodiment of the disclosure includes the method according to statement 38, wherein transmitting the filtered content stream using the network interface device of the device includes transmitting the filtered content stream using a network interface card of the device.
Statement 85. An embodiment of the disclosure includes an article, comprising a non-transitory storage medium, the non-transitory storage medium having stored thereon instructions that, when executed by a machine, result in:
   accessing a content stream using a device;
   filtering the content stream using a processing circuit of the device to produce a filtered content stream; and
   transmitting the filtered content stream using a network interface device of the device.
Statement 86. An embodiment of the disclosure includes the article according to statement 85, wherein accessing the content stream using the device includes accessing the content stream from a storage device of the device.
Statement 87. An embodiment of the disclosure includes the article according to statement 86, wherein accessing the content stream from the storage device of the device includes accessing the content stream from a Solid State Drive (SSD) of the device.
Statement 88. An embodiment of the disclosure includes the article according to statement 85, wherein accessing the content stream using the device includes receiving the content stream from a source.
Statement 89. An embodiment of the disclosure includes the article according to statement 88, wherein receiving the content stream from the source includes storing the content stream in a storage device of the device.
Statement 90. An embodiment of the disclosure includes the article according to statement 89, wherein storing the content stream in the storage device of the device includes storing the content stream in a Solid State Drive (SSD) of the device.
Statement 91. An embodiment of the disclosure includes the article according to statement 85, wherein accessing the content stream using the device includes storing the content stream in the processing circuit of the device.
Statement 92. An embodiment of the disclosure includes the article according to statement 91, wherein storing the content stream in the processing circuit of the device includes storing a first content stream portion in the processing circuit of the device, the content stream including the first content stream portion and a second content stream portion.
Statement 93. An embodiment of the disclosure includes the article according to statement 92, wherein storing the first content stream portion in the processing circuit of the device includes storing the first content stream portion in a buffer of the processing circuit of the device.
Statement 94. An embodiment of the disclosure includes the article according to statement 93, wherein filtering the content stream using the processing circuit of the device to produce the filtered content stream includes filtering the first content stream portion in the buffer of the processing circuit of the device to produce a filtered content stream portion.
Statement 95. An embodiment of the disclosure includes the article according to statement 94, wherein transmitting the filtered content stream using the network interface device of the device includes transmitting the filtered content stream portion using the network interface device.
Statement 96. An embodiment of the disclosure includes the article according to statement 95, wherein transmitting the filtered content stream portion using the network interface device includes transmitting the filtered content stream portion using the network interface device to a client.
Statement 97. An embodiment of the disclosure includes the article according to statement 94, wherein filtering the first content stream portion in the buffer of the processing circuit of the device to produce the filtered content stream portion includes filtering the second content stream portion in the buffer of the processing circuit of the device to produce a second filtered content stream portion.
Statement 98. An embodiment of the disclosure includes the article according to statement 97, wherein:
   filtering the first content stream portion in the buffer of the processing circuit of the device to produce the filtered content stream portion includes applying a filtering policy to the first content stream portion in the buffer of the processing circuit of the device to produce the filtered content stream portion; and
   filtering the second content stream portion in the buffer of the processing circuit of the device to produce the second filtered content stream portion includes applying the filtering policy to the second content stream portion in the buffer of the processing circuit of the device to produce the second filtered content stream portion.
Statement 99. An embodiment of the disclosure includes the article according to statement 97, wherein filtering the second content stream portion in the buffer of the processing circuit of the device to produce the second filtered content stream portion includes filtering the second content stream portion in the buffer of the processing circuit of the device to produce the second filtered content stream portion based at least in part on transmission of the filtered content stream portion.
Statement 100.An embodiment of the disclosure includes the article according to statement 99, wherein transmitting the filtered content stream using the network interface device of the device includes transmitting the filtered content stream portion and the second filtered content stream portion using the network interface device.
Statement 101 .An embodiment of the disclosure includes the article according to statement 100, wherein transmitting the filtered content stream portion and the second filtered content stream portion using the network interface device includes transmitting the filtered content stream portion and the second filtered content stream portion using the network interface device to a client.
Statement 102.An embodiment of the disclosure includes the article according to statement 94, wherein filtering the first content stream portion in the buffer of the processing circuit of the device to produce the filtered content stream portion includes filtering the second content stream portion in a second buffer of the processing circuit of the device to produce a second filtered content stream portion.
Statement 103.An embodiment of the disclosure includes the article according to statement 102, wherein:
   filtering the first content stream portion in the buffer of the processing circuit of the device to produce the filtered content stream portion includes applying a filtering policy to the first content stream portion in the buffer of the processing circuit of the device to produce the filtered content stream portion; and
   filtering the second content stream portion in the second buffer of the processing circuit of the device to produce the second filtered content stream portion includes applying the filtering policy to the second content stream portion in the second buffer of the processing circuit of the device to produce the second filtered content stream portion.
Statement 104.An embodiment of the disclosure includes the article according to statement 102, wherein:
   filtering the first content stream portion in the buffer of the processing circuit of the device to produce the filtered content stream portion includes applying a first filtering policy to the first content stream portion in the buffer of the processing circuit of the device to produce the filtered content stream portion; and
   filtering the second content stream portion in the buffer of the processing circuit of the device to produce the second filtered content stream portion includes applying a second filtering policy to the second content stream portion in the buffer of the processing circuit of the device to produce the second filtered content stream portion.
Statement 105.An embodiment of the disclosure includes the article according to statement 102, wherein transmitting the filtered content stream using the network interface device of the device includes transmitting the filtered content stream portion and the second filtered content stream portion using the network interface device.
Statement 106.An embodiment of the disclosure includes the article according to statement 105, wherein transmitting the filtered content stream portion and the second filtered content stream portion using the network interface device includes:
   transmitting the filtered content stream portion using the network interface device to a first client; and
   transmitting the second filtered content stream portion using the network interface device to a second client.
Statement 107.An embodiment of the disclosure includes the article according to statement 94, wherein filtering the first content stream portion in the buffer of the processing circuit of the device to produce the filtered content stream portion includes filtering a third content stream portion in a second buffer of the processing circuit of the device to produce a second filtered content stream portion, a second content stream including the third content stream portion and a fourth content stream portion.
Statement 108.An embodiment of the disclosure includes the article according to statement 107, wherein:
   filtering the first content stream portion in the buffer of the processing circuit of the device to produce the filtered content stream portion includes applying a filtering policy to the first content stream portion in the buffer of the processing circuit of the device to produce the filtered content stream portion; and
   filtering a third content stream portion in a second buffer of the processing circuit of the device to produce a second filtered content stream portion includes applying the filtering policy to the third content stream portion in the second buffer of the processing circuit of the device to produce the second filtered content stream portion.
Statement 109.An embodiment of the disclosure includes the article according to statement 107, wherein:
   filtering the first content stream portion in the buffer of the processing circuit of the device to produce the filtered content stream portion includes applying a first filtering policy to the first content stream portion in the buffer of the processing circuit of the device to produce the filtered content stream portion; and
   filtering a third content stream portion in a second buffer of the processing circuit of the device to produce a second filtered content stream portion includes applying a second filtering policy to the third content stream portion in the second buffer of the processing circuit of the device to produce the second filtered content stream portion.
Statement 110.An embodiment of the disclosure includes the article according to statement 107, wherein transmitting the filtered content stream using the network interface device of the device includes transmitting the filtered content stream portion and the second filtered content stream portion using the network interface device.
Statement 111 .An embodiment of the disclosure includes the article according to statement 110, wherein transmitting the filtered content stream portion and the second filtered content stream portion using the network interface device includes:
   transmitting the filtered content stream portion using the network interface device to a first client; and
   transmitting the second filtered content stream portion using the network interface device to a second client.
Statement 112.An embodiment of the disclosure includes the article according to statement 91, wherein:
   the first content stream portion includes a content type; and
   filtering the content stream using the processing circuit of the device to produce the filtered content stream includes detecting the content type to be filtered.
Statement 113.An embodiment of the disclosure includes the article according to statement 112, wherein the first content stream portion further includes a second content type.
Statement 114.An embodiment of the disclosure includes the article according to statement 112, wherein filtering the content stream using the processing circuit of the device to produce the filtered content stream further includes accessing the content type from a storage device of the device.
Statement 115.An embodiment of the disclosure includes the article according to statement 112, wherein filtering the content stream using the processing circuit of the device to produce the filtered content stream further includes detecting the content type in the first content stream portion using the processing circuit of the device.
Statement 116.An embodiment of the disclosure includes the article according to statement 115, wherein detecting the content type in the first content stream portion using the processing circuit of the device includes detecting the content type in the first content stream portion using a content detection circuit of the processing circuit of the device.
Statement 117.An embodiment of the disclosure includes the article according to statement 116, wherein the content detection circuit includes an FPGA, an ASIC, an SoC, a single core processor or a multi-core processor, a CPU, a GPU, a GPGPU, a TPU, or an NPU.
Statement 118.An embodiment of the disclosure includes the article according to statement 116, wherein detecting the content type in the first content stream portion using the content detection circuit of the processing circuit of the device includes detecting a second content type in the first content stream portion using the content detection circuit of the processing circuit of the device.
Statement 119.An embodiment of the disclosure includes the article according to statement 116, the non-transitory storage medium having stored thereon further instructions that, when executed by the machine, result in detecting the content type in the first content stream portion using a second content detection circuit of the processing circuit of the device.
Statement 120.An embodiment of the disclosure includes the article according to statement 116, the non-transitory storage medium having stored thereon further instructions that, when executed by the machine, result in detecting a second content type in the first content stream portion using a second content detection circuit of the processing circuit of the device.
Statement 121 .An embodiment of the disclosure includes the article according to statement 116, the non-transitory storage medium having stored thereon further instructions that, when executed by the machine, result in detecting the content type in a third content stream portion using a second content detection circuit of the processing circuit of the device, a second content stream including the third content stream portion and a fourth content stream portion.
Statement 122.An embodiment of the disclosure includes the article according to statement 116, the non-transitory storage medium having stored thereon further instructions that, when executed by the machine, result in detecting a second content type in a third content stream portion using a second content detection circuit of the processing circuit of the device, a second content stream including the third content stream portion and a fourth content stream portion.
Statement 123.An embodiment of the disclosure includes the article according to statement 115, wherein detecting the content type in the first content stream portion using the processing circuit of the device includes storing the content type in the first content stream portion associated with the first content stream portion in a storage device of the device.
Statement 124.An embodiment of the disclosure includes the article according to statement 85, wherein filtering the content stream using the processing circuit of the device to produce the filtered content stream includes applying a filtering policy to the content stream using the processing circuit of the device to produce the filtered content stream.
Statement 125.An embodiment of the disclosure includes the article according to statement 85, wherein filtering the content stream using the processing circuit of the device to produce the filtered content stream includes filtering the content stream using a filtering circuit in the processing circuit of the device to produce the filtered content stream.
Statement 126.An embodiment of the disclosure includes the article according to statement 125, wherein the filtering circuit includes a Field Programmable Gate Array (FPGA), an Application-Specific Integrated Circuit (ASIC), a System-on-a-Chip (SoC), a single core processor or a multi-core processor, a Central Processing Unit (CPU), a Graphics Processing Unit (GPU), a General Purpose GPU (GPGPU), a Tensor Processing Unit (TPU), or a Neural Processing Unit (NPU).
Statement 127.An embodiment of the disclosure includes the article according to statement 85, wherein filtering the content stream using the processing circuit of the device to produce the filtered content stream includes delaying transmission of the content stream for an interval by the network interface device of the device.
Statement 128.An embodiment of the disclosure includes the article according to statement 127, wherein filtering the content stream using the processing circuit of the device to produce the filtered content stream further includes filtering the content stream using the processing circuit of the device to produce the filtered content stream during the interval.
Statement 129.An embodiment of the disclosure includes the article according to statement 85, wherein:
   the content stream includes a content stream portion; and
   filtering the content stream using the processing circuit of the device to produce the filtered content stream includes replacing the content stream portion of the content stream with a replacement content stream portion.
Statement 130.An embodiment of the disclosure includes the article according to statement 85, wherein:
   the content stream includes a content stream portion; and
   filtering the content stream using the processing circuit of the device to produce the filtered content stream includes deleting the content stream portion from the content stream.
Statement 131 .An embodiment of the disclosure includes the article according to statement 85, wherein transmitting the filtered content stream using the network interface device of the device includes transmitting the filtered content stream using a network interface card of the device.

Consequently, in view of the wide variety of permutations to the embodiments described herein, this detailed description and accompanying material is intended to be illustrative only, and should not be taken as limiting the scope of the disclosure. Alternative embodiments are possible and the described embodiments may be modified within the scope of the appended claims.

## Claims

1. A device, comprising:
a storage device storing a content stream;
a network interface device to transmit a filtered content stream; and
a processing circuit connected to the storage device and the network interface device,
wherein the processing circuit is configured to apply a filtering policy to the content stream to produce the filtered content stream.

2. The device according to claim 1, wherein:
the processing circuit includes:
a buffer to store a first content stream portion, the content stream including the first content stream portion and a second content stream portion; and
a filtering circuit, the filtering circuit configured to apply the filtering policy to the first content stream portion to produce a filtered content stream portion; and
the network interface device is configured to transmit the filtered content stream portion.

3. The device according to claim 2, wherein:
the processing circuit further includes a second buffer, the second buffer storing a third content stream portion, a second content stream including the third content stream portion and a fourth content stream portion;
the processing circuit further includes a second filtering circuit, the second filtering circuit configured to apply a second filtering policy to the third content stream portion to produce a second filtered content stream portion, a second filtered content stream including the second filtered content stream portion; and
the network interface device is configured to transmit the second filtered content stream portion.

4. The device according to claim 3, wherein the network interface device is configured to transmit the filtered content stream portion to a first client and the second filtered content stream portion to a second client.

5. The device according to any one of claims 2 to 4, wherein:
the first content stream portion includes a content type; and
the filtering policy identifies the content type to be filtered.

6. The device according to claim 1, wherein the processing circuit includes a content detection circuit to identify a content type in a first content stream portion, the first content stream including the first content stream portion and a second content stream portion.

7. The device according to claim 6, wherein:
the processing circuit further includes a buffer storing the first content stream portion; and
the content detection circuit is configured to identify the content type in the first content stream portion based at least in part on the first content stream portion being in the buffer.

8. The device according to claim 6 or 7, the processing circuit further including:
a second buffer storing a third content stream portion; and
a second content detection circuit to identify a second content type in the third content stream portion based at least in part on the third content stream portion being in the second buffer.

9. The device according to any one of claims 1 to 8, wherein the processing circuit includes a delay circuit to delay the network interface device for an interval before transmitting the filtered content stream.

10. The device according to claim 9, wherein the processing circuit is configured to apply the filtering policy during the interval.

11. The device according to any one of claims 1 to 10, wherein:
the content stream includes a content stream portion; and
the filtering policy specifies to delete the content stream portion from the content stream or to replace the content stream portion in the content stream with a replacement content stream portion in the content stream.

12. A method, comprising:
accessing a content stream using a device;
filtering the content stream using a processing circuit of the device to produce a filtered content stream; and
transmitting the filtered content stream using a network interface device of the device.

13. The method according to claim 12, wherein accessing the content stream using the device includes:
receiving the content stream from a source; and
storing the content stream in a storage device of the device.

14. The method according to claim 12 or 13, wherein:
accessing the content stream using the device includes storing a first content stream portion in a buffer of the processing circuit of the device, the content stream including the first content stream portion and a second content stream portion; and
filtering the content stream using the processing circuit of the device to produce the filtered content stream includes filtering the first content stream portion in the buffer of the processing circuit of the device to produce a filtered content stream portion.

15. The method according to claim 14, wherein:
filtering the first content stream portion in the buffer of the processing circuit of the device to produce the filtered content stream portion includes applying a filtering policy to the first content stream portion in the buffer of the processing circuit of the device to produce the filtered content stream portion; and
the method further comprises applying a second filtering policy to the second content stream portion in the buffer of the processing circuit of the device to produce the second filtered content stream portion.
